# EUROPEAN PATENT SPECIFICATION

(11) **EP 3 017 168 B1**
(45) Date of publication and mention of the grant of the patent: **09.08.2017**
(21) Application number: 14735688.5
(22) Date of filing: 06.06.2014
(51) Int. Cl.: F02D 41/00, F02D 41/22, F02D 41/04, F02D 41/34, F02N 11/08, F02N 99/00

(54) **ENGINE SYSTEM AND SADDLE-STRADDLING TYPE MOTOR VEHICLE**
MOTORSYSTEM UND GRÄTSCHSITZKRAFTFAHRZEUG
SYSTÈME DE MOTEUR ET VÉHICULE MOTORISÉ DU TYPE À ENFOURCHER

(30) Priority: 03.07.2013 JP 2013140158
(43) Date of publication of application: 11.05.2016
(73) Proprietor: Yamaha Hatsudoki Kabushiki Kaisha, Iwata-shi, Shizuoka 438-8501 (JP)
(72) Inventor: MAEBASHI, Kosei, Iwata-shi Shizuoka 438-8501 (JP); NISHIMURA, Tetsuhiko, Iwata-shi Shizuoka 438-8501 (JP)
(74) Representative: Stöckeler, Ferdinand
(86) International application number: PCT/JP2014/003036
(87) International publication number: WO 2015/001712

(56) References cited:
- EP-A1- 1 731 738
- WO-A1-2006/054734
- WO-A2-2009/007820
- US-A1- 2005 228 575

## Description

### Technical Field

The present invention relates to an engine system and a saddle-straddling type motor vehicle.

### Background Art

In recent years, in a saddle-straddling type motor vehicle such as a motorcycle, technique that automatically performs an idle stop has been developed. Specifically, when a vehicle is temporarily stopped to wait at the traffic light or the like, an engine is automatically stopped. Thereafter, when the vehicle starts moving, the engine is automatically re-started. While the vehicle is being driven, the idle stop may be frequently performed. Therefore, the re-start after the idle stop is required to be quickly performed.

In Patent Document 1, an engine control device that generates a first explosion at an appropriate time point at the time of an engine start-up by a kick start or the like is described.

Generally, at the time of the start-up of a fuel injection type engine, a series of operation including fuel injection, intake, compression, ignition, expansion and exhaustion is controlled based on a rotation position (a crank angle)of a crank shaft. Therefore, it is necessary to detect the rotation position of the crank shaft in order to quickly operate the engine.

The engine control device of Patent Document 1 includes a crank angle detection device that detects the rotation position of the crank shaft. The crank angle detection device includes a rotor and an electromagnetic pickup. The rotor is rotated with the rotation of the crank shaft. A plurality of convex portions made of a magnetic material are provided at the outer peripheral surface of the rotor at equal intervals. Hereinafter, one convex portion of the plurality of convex portions is referred to as a reference convex portion. The length from the front end to the rear end of the reference convex portion in a circumferential direction is larger than the length from the front end to the rear end of the other convex portions in a circumferential direction.

The electromagnetic pickup is provided in the vicinity of the outer peripheral surface of the rotor, and generates a crank angle pulse signal indicating that the front end and the rear end of each convex portion has passed through the vicinity at the time of rotation of the rotor. A front end position pulse and a rear end position pulse that respectively indicate the detection of the front end and the detection of the rear end of each convex portion are generated based on the crank angle pulse signal. The rear end of the reference convex portion is detected based on the generation intervals of the front end position pulses and the generation intervals of the rear end position pulses.

The plurality of convex portions except for the reference convex portion are respectively detected with a detection time point of the rear end of the reference convex used as a basis. Thus, the rotation position of the crank shaft with the detection time point of the rear end of the reference convex portion used as a basis is detected based on the front end position pulse and the rear end position pulse of each convex portion.

In the above-mentioned engine control device, the reference convex portion is provided on the outer peripheral surface of the rotor such that the rear end of the reference convex portion is detected by the electromagnetic pickup right before a piston of the engine reaches a compression top dead center.

Thus, at the time of the engine start-up, spark discharge (the ignition) of the ignition plug is generated at a time point at which the rear end of the convex portion that is to be detected subsequently to the reference convex portion is detected after the rear end of the reference convex portion is detected in a period from the time when the crank shaft starts the rotation until the time when the crank shaft performs one rotation, so that a first explosion is generated. In this manner, because the first explosion is generated in a period from the time when the crank shaft starts the rotation until the time when the crank shaft performs one rotation, the engine can be quickly started. Thereafter, the operation of the engine is controlled according to the rotation position of the crank shaft detected based on the front end position pulse and the rear end position pulse of each convex portion.

Even at the time of the re-start after the idle stop, the first explosion is executed by the above-mentioned engine control device, whereby the startability is improved. In a case in which the ignition of the fuel-air mixture is performed in the first compression stroke after the re-start of the engine, the fuel is injected in the cylinder during the idle stop, for example, whereby the fuel-air mixture is kept in the combustion chamber. Thus, the first explosion at the time of the re-start of the engine is generated (see Patent Document 2, for example).

### Citation List

### Patent Literature

[PTL 1] JP 2005-291143 A
[PTL 2] JP 4419655 B

### Summary of Invention

### Technical Problem

In the engine control device of Patent Document 1, however, a time point for the spark discharge is determined based on the detection of the front ends and the rear ends of the plurality of convex portions by the crank angle detection device. Therefore, when the crank angle detection device does not normally function due to failure of the electromagnetic pickup or the like, the spark discharge may be generated at a wrong time point. In this case, because the first explosion cannot be appropriately generated even if the spark discharge is generated, the fuel-air mixture in the combustion chamber cannot be sufficiently combusted. If the fuel-air mixture is exhausted from the combustion chamber without contributing to the engine start-up, the fuel included in the exhausted air-fuel mixture is wasteful. Further, the fuel exhausted from the combustion chamber deteriorates a catalyst.

An object of the present invention is to provide an engine system that can perform control in an idle stop mode, and in which fuel efficiency can be improved and deterioration of a catalyst can be inhibited, and a saddle-straddling type motor vehicle including the engine system.

### Solution to Problem

(1) According to one aspect of the present invention, an engine system includes an engine that has a fuel injection device that injects fuel into an intake passage that leads air into a combustion chamber of a cylinder and produces a fuel-air mixture, an ignition device that ignites the fuel-air mixture in the combustion chamber, a first detection subject (a first subject for detection) to be detected provided to be rotated together with a crank shaft and a first detector provided to detect the first detection subject, a controller configured to control the engine in a normal mode in which ignition of the fuel-air mixture by the ignition device is performed, and in an idle stop mode in which the ignition of the fuel-air mixture by the ignition device is not performed, and an abnormality detector that detects an operation abnormality of the first detector. The ignition device is controlled to ignite the fuel-air mixture compressed in a first compression stroke after a change from the idle stop mode to the normal mode based on detection of the first detection subject by the first detector, and the fuel injection device is controlled such that the fuel-air mixture is kept in the combustion chamber when rotation of the crank shaft is stopped in the idle stop mode in a case in which the operation abnormality of the first detector is not detected by the abnormality detector, and is controlled so as not to inject the fuel in the idle stop mode in a case in which the operation abnormality of the first detector is detected by the abnormality detector.
   In the engine system, the engine is controlled in the normal mode and the idle stop mode. In the normal mode, the ignition of the fuel-air mixture is performed in the cylinder of the engine. Thus, a series of operation including intake, compression, expansion and exhaustion is repeated in the engine. On the other hand, in the idle stop mode, the ignition of the fuel-air mixture is not performed in the cylinder of the engine. Thus, when the control of the engine is changed from the normal mode to the idle stop mode, the rotation speed of the crank shaft is reduced, and the rotation of the crank shaft is eventually stopped.
   In a case in which the operation abnormality of the first detector is not detected by the abnormality detector, the fuel-air mixture is kept in the combustion chamber when the rotation of the crank shaft is stopped in the idle stop mode. That is, the ignition by the ignition device is stopped and the injection of the fuel by the fuel injection device is performed in a period from the time when the idle stop mode is started until the time when the rotation of the crank shaft is stopped. In this state, the ignition device is controlled to ignite the fuel-air mixture compressed in the above-mentioned first compression stroke based on the detection of the first detection subject by the first detector. Thus, the fuel-air mixture kept in the combustion chamber is combusted. Therefore, the re-start of the engine can be quickly performed.
   In a case in which the operation abnormality of the first detector is detected by the abnormality detector, the fuel injection device is controlled so as not to inject the fuel in the idle stop mode. Thus, if the control of the engine is changed from the idle stop mode to the normal mode, air is introduced into the combustion chamber. Further, the introduced air is exhausted from the combustion chamber. Therefore, when the rotation of the crank shaft is stopped, the fuel-air mixture is hardly present in the combustion chamber. Therefore, in the first exhaust stroke after the change from the idle stop mode to the normal mode, the uncombusted air-fuel mixture is inhibited from being exhausted from the combustion chamber. As a result, wasteful consumption of the fuel is inhibited, and the fuel efficiency is improved. Further, the deterioration of the catalyst provided in the exhaust system due to the uncombusted air-fuel mixture is inhibited.
(2) The engine further may further include a rotation member, a reference detection subject (a reference subject for detection), a plurality of second detection subjects (second subjects for detection) and a second detector, the rotation member may be rotated together with the crank shaft, the reference detection subject and the plurality of second detection subjects are arranged at the rotation member in a rotation direction of the rotation member, and the plurality of second detection subjects include a detection subject for ignition, the first detection subject may be provided at the rotation member to be arranged at a position different from the reference detection subject and the plurality of second detection subjects in a direction along a rotation axis of the rotation member, the first detector may be provided at a first fixed position to be capable of detecting the first detection subject at the time of rotation of the rotation member, the second detector may be provided at a second fixed position to be capable of sequentially detecting the reference detection subject and the plurality of second detection subjects at the time of the rotation of the rotation member, the first fixed position may be different from the second fixed position in the direction along the rotation axis of the rotation member, the first detection subject may be arranged to be detected by the first detector in the compression stroke, the reference detection subject may be arranged to be detected by the second detector in any one stroke of an intake stroke, an expansion stroke and an exhaust stroke, the controller may be capable of identifying detection of the detection subject for ignition by the second detector based on detection of the reference detection subject by the second detector, and is capable of identifying detection of the detection subject for ignition by the second detector based on detection of the first detection subject by the first detector in a case in which the first detection subject is detected by the first detector before the reference detection subject is first detected by the second detector after rotation of the crank shaft is started in an engine stop state, and the ignition device may be controlled to ignite the fuel-air mixture compressed in the compression stroke in response to detection of the identified detection subject for ignition.
   In the above-mentioned configuration, the crank shaft is rotated, so that the rotation member is rotated. At the time of the rotation of the rotation member, the first detection subject is detected in the compression stroke by the first detector. Further, at the time of the rotation of the rotation member, the reference detection subject and the plurality of second detection subjects are sequentially detected by the second detector. In this case, the reference detection subject is detected in any one stroke of the intake stroke, the expansion stroke and the exhaust stroke.
   The plurality of second detection subjects include the detection subject for ignition. In the normal mode, the detection of the detection subject for ignition by the second detector is identified based on the detection of the reference detection subject by the second detector. The ignition of the fuel-air mixture compressed in the compression stroke is performed in response to the detection of the identified detection subject for ignition. Thus, the series of operation including the intake, the compression, the expansion and the exhaustion is repeated.
   At the time of changing from the idle stop mode to the normal mode, the first detection subject is detected in the first compression stroke by the first detector before the reference detection subject is first detected by the second detector after the rotation of the crank shaft is started in the engine stop state. Thus, the detection of the detection subject for ignition by the second detector is quickly identified based on the detection of the first detection subject by the first detector before the reference detection subject is detected. The ignition device is controlled to ignite the fuel-air mixture compressed in the first compression stroke in response to the detection of the identified detection subject for ignition. Thus, when the operation abnormality has not occurred at the first detector, the re-start of the engine can be quickly performed.
(3) The abnormality detector may detect the operation abnormality of the first detector based on detection of the first detection subject by the first detector and detection of the plurality of second detection subjects by the second detector in the normal mode.
   Each of the first detection subject and the plurality of second detection subjects are provided at the rotation member to be rotated together with the crank shaft. Therefore, when the operation abnormality has not occurred at the first detector, the relation between the number of times of detection of the second detection subject by the second detector and the number of times of detection of the first detection subject by the first detector in one rotation of the crank shaft is kept constant, for example. On the other hand, when the operation abnormality has occurred at the first detector, the relation between the number of times of detection of the second detection subject by the second detector and the number of times of detection of the first detection subject by the first detector in one rotation of the crank shaft is different from the above-mentioned constant relation.
   Therefore, the operation abnormality of the first detector can be easily and accurately detected based on the detection of the first detection subject by the first detector and the detection of the plurality of second detection subjects by the second detector.
(4) The first detector may have a first detection region at a fixed portion on a trajectory on which the first detection subject passes with rotation of the rotation member, and detects the first detection subject when the first detection subject passes through the first detection region, and the second detector may have a second detection region at a fixed position on a trajectory on which the reference detection subject and the plurality of second detection subjects pass with rotation of the rotation member, detects each second detection subject when each second detection subject passes through the second detection region, and detects the reference detection subject when the reference detection subject passes through the second detection region.
   In this case, the trajectory on which the first detection subject passes is different from the trajectory on which each second detection subject passes. The first detection region of the first detector is positioned on the trajectory on which the first detection subject passes, and the second detection region of the second detector is positioned on the trajectory on which each second detection subject passes. Thus, false detection of the plurality of second detection subjects by the first detector can be prevented. Further, false detection of the first detection subject by the second detector can be prevented.
(5) The first detection subject may be arranged to be detected by the first detector when a piston is at a position closer to a top dead center than an intermediate position between a bottom dead center and the top dead center, and the reference detection subject may be arranged to be detected by the second detector when the piston is at a position closer to the bottom dead center than the intermediate position.
   The rotation speed of the crank shaft is low right after the rotation of the crank shaft is started in the engine stop state. Therefore, even when the piston approaches the top dead center from the intermediate position in the compression stroke, whereby the rotation speed of the crank shaft is temporarily reduced, the first detection subject is accurately detected by the first detector. Thus, the first detection subject is likely to be detected in the first compression stroke by the first detector before the reference detection subject is first detected by the second detector after the rotation of the crank shaft is started in the engine stop state.
   On the other hand, the rotation speed of the crank shaft in the normal mode is high as compared to the rotation speed right after the rotation of the crank shaft is started in the engine stop state. Even in such a case, when the piston is in a range from the intermediate position to the top dead center, a change in rotation speed of the crank shaft is relatively small. Thus, the reference detection subject is accurately detected by the second detector even at the time of high-speed rotation of the engine.
   As a result, the quick re-start of the engine can be stably performed, and the control of the engine at the time of the high-speed rotation can be stably performed.
(6) The engine may be a single-cylinder engine.
   In the single-cylinder engine, the rotation of the crank shaft is stopped in the compression stroke. Therefore, the ignition of the fuel-air mixture is performed in the first compression stroke after the rotation of the crank shaft is started in the engine stop state, whereby the quick re-start of the engine can be stably performed.
(7) The controller may change from the normal mode to the idle stop mode when predetermined idle stop condition is satisfied. In this case, the controller can change from the normal mode to the idle stop mode at an appropriate time point.
(8) The idle stop condition may include a condition that relates to at least one of a throttle opening (a degree of opening), a vehicle speed and an engine rotation speed. In this case, the controller can appropriately change from the normal mode to the idle stop mode according to at least one of the throttle opening, the vehicle speed and the engine rotation speed.
(9) The controller may change from the idle stop mode to the normal mode when a predetermined re-start condition is satisfied. In this case, the controller can change from the idle stop mode to the normal mode at an appropriate time point.
(10) The re-start condition may include a condition that relates to the throttle opening. In this case, the controller can appropriately change from the idle stop mode to the normal mode according to the throttle opening.
(11) According to another aspect of the present invention, a saddle-straddling type motor vehicle includes a main body that has a drive wheel, and the above-mentioned engine system that generates power for rotating the drive wheel.

In the saddle-straddling type motor vehicle, the drive wheel is rotated by the power generated by the above-mentioned engine system. Thus, the main body is moved. In this case, because the above-mentioned engine system is used, the saddle-straddling type motor vehicle in which the control can be performed in the idle stop mode, the fuel consumption is improved, and deterioration of the catalyst is inhibited.

### Advantageous Effects of Invention

The present invention enables the engine system that can perform control in the idle stop mode, and in which the fuel consumption can be improved and the deterioration of the catalyst can be inhibited, and the saddle-straddling type motor vehicle that includes the engine system to be realized.

### Brief Description of Drawings

[fig.1]FIG. 1 is a schematic side view showing the schematic configuration of a motorcycle according to one embodiment of the present invention.
[fig.2]FIG. 2 is an external perspective view showing the configuration of a handle.
[fig.3]FIG. 3 is a schematic diagram for explaining the configuration of an engine.
[fig.4]FIG. 4 is a schematic side view for explaining a crank angle detection mechanism.
[fig.5]Fig. 5 is a development diagram of an outer peripheral surface of a rotor.
[fig.6]Fig. 6 is a timing chart showing the relation between a position of a piston that changes in one cycle, and a crank pulse and a re-start pulse generated in the one cycle in the engine of Fig. 3.
[fig.7]Fig. 7 is a block diagram showing a control system of the motorcycle of Fig. 1.
[fig.8]Fig. 8 is a timing chart showing the one control example of the engine by a normal mode and an idle stop mode obtained when the operation abnormality has not occurred at a reference angle sensor.
[fig.9]Fig. 9 is a timing chart showing one control example of the engine by the normal mode and the idle stop mode obtained when the operation abnormality has occurred at the reference angle sensor.
[fig.10]Fig. 10 is a flow chart showing one control example of the engine by a CPU of Fig. 7.
[fig.11]Fig. 11 is a flow chart showing a pre-stop fuel injection process.

### Description of Embodiments

An engine system and a saddle-straddling type motor vehicle that includes the engine system according to embodiments of the present invention will be described below.

### (1) Motorcycle

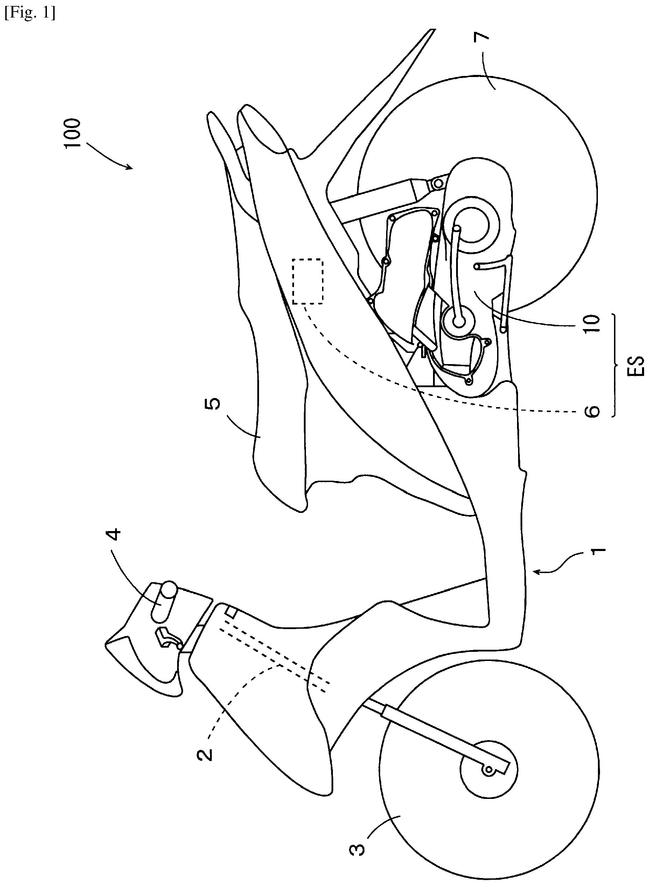

Fig. 1 is a schematic side view showing the schematic configuration of a motorcycle according to one embodiment of the present invention. The motorcycle 100 of Fig. 1 is one example of the saddle-straddling type motor vehicle. In the following description, the front, the rear, the left, and the right respectively mean the front, the rear, the left, and the right based on a viewpoint of a rider of the motorcycle.

In the motorcycle 100 of Fig. 1, a front fork 2 is provided at a front portion of a vehicle body 1 to be swingable to the right and the left. A handle 4 is attached to an upper end of the front fork 2, and a front wheel 3 is attached to a lower end of the front fork 2 to be rotatable.

A seat 5 is provided at an upper portion of substantially the center of the vehicle body 1. A control device 6 and an engine 10 are provided below the seat 5. In the present embodiment, the control device 6 is an ECU (Electronic Control Unit), for example, and the engine 10 is a four-stroke single-cylinder engine. An engine system ES is constituted by the control device 6 and the engine 10. A rear wheel 7 is attached to a lower portion of the rear end of the vehicle body 1 to be rotatable. The rear wheel 7 is driven to be rotated by the power generated by the engine 10.

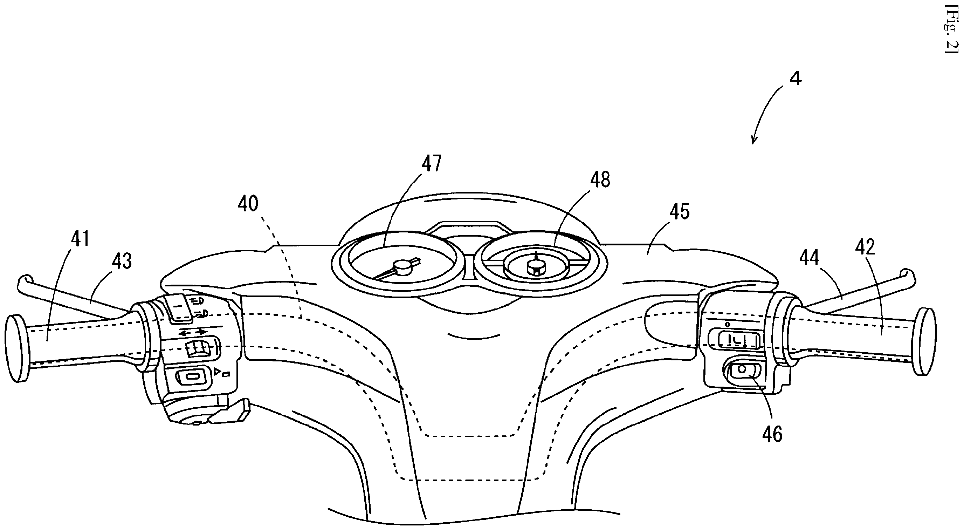

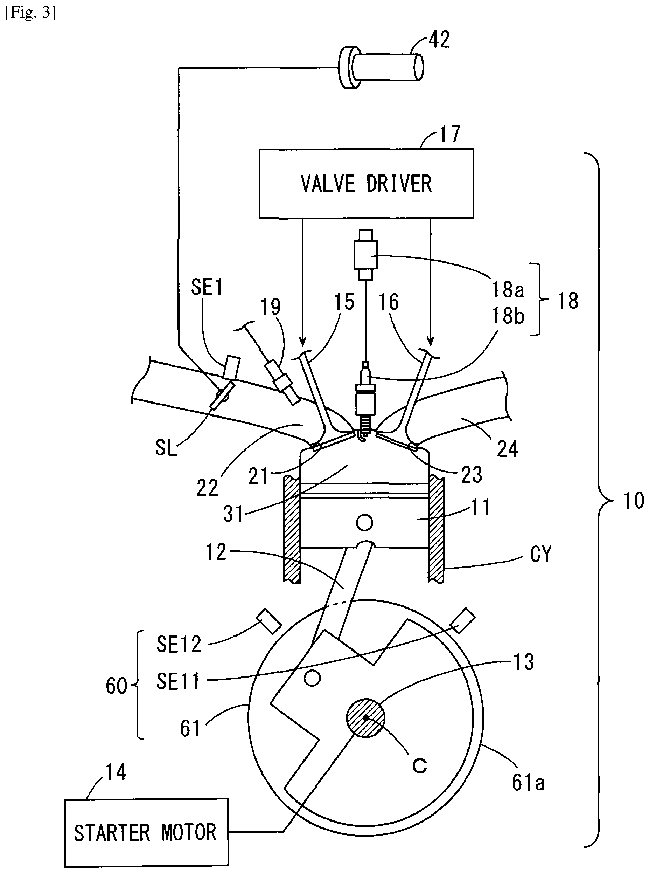

Fig. 2 is an external perspective view showing the configuration of the handle 4. In Fig. 2, appearance of the handle 4 viewed from the rider who is seated on the seat 5 is shown. As shown in Fig. 2, the handle 4 includes a handle bar 40 that laterally extends. A grip 41 is provided at the left end of the handle bar 40, and an accelerator grip 42 is provided at the right end of the handle bar 40. The accelerator grip 42 is provided to be rotatable in a predetermined range of a rotation angle with respect to the handle bar 40. The accelerator grip 42 is operated, whereby an opening degree of a below-mentioned throttle valve SL (Fig. 3) is adjusted.

A brake lever 43 for operating the brake of the rear wheel 7 (Fig. 1) is arranged in front of the grip 41, and a brake lever 44 for operating the brake of the front wheel 3 (Fig. 1) is arranged in front of the accelerator grip 42. The handle bar 40 is covered by a handle cover 45. A starter switch 46 for starting the engine 10 (Fig. 1) is provided at a portion of the handle cover 45 that is adjacent to the accelerator grip 42. The starter switch 46 instructs the control device 6 to start the engine 10 in response to the operation of the rider of the motorcycle 100.

Further, a speed meter 47, an engine rotation speed meter 48, various types of switches and the like are provided at the handle cover 45. Further, a main switch (not shown) is provided below the handle cover 45. The main switch is operated by the rider in order to supply electric power from a battery to an electrical system such as the control device 6.

Fig. 3 is a schematic diagram for explaining the configuration of the engine 10. As shown in Fig. 3, the engine 10 includes a cylinder CY, a piston 11, a connecting rod 12, a crank shaft 13 and a starter motor 14. Further, the engine 10 includes an intake valve 15, an exhaust valve 16, a valve driver 17, an ignition device 18, an injector 19, a crank angle detection mechanism 60 and a throttle opening sensor SE1.

The piston 11 is provided to be capable of reciprocating in the cylinder CY, and is connected to the crank shaft 13 via the connecting rod 12. The reciprocating motion of the piston 11 is converted into the rotational motion of the crank shaft 13. The starter motor 14 and a rotor 61 are attached to the crank shaft 13.

The starter motor 14 rotates the crank shaft 13 at the time of the start-up of the engine 10. A crank angle detection mechanism 60 includes the rotor 61, a crank angle sensor SE11 and a reference angle sensor SE12. The rotor 61 is fixed to the crank shaft 13. Thus, at the time of rotation of the crank shaft 13, the rotor 61 is integrally rotated with the crank shaft 13 around a rotation axis C of the crank shaft 13. Further, the rotor 61 has an outer peripheral surface 61a that is formed to extend along a circle with the rotation axis C of the crank shaft 13 used as a center. The crank angle sensor SE11 and the reference angle sensor SE12 are arranged in the vicinity of the rotor 61. A rotation position (a crank angle) of the crank shaft 13 is detected by the crank angle detection mechanism 60.

Further, a generator (not shown) is attached to the crank shaft 13. The generator generates electrical power by the rotation of the crank shaft 13. A battery (not shown) is charged by the generated electrical power. The electrical power stored in the battery is supplied to each constituent element of the motorcycle 100. The rotor included in the generator may be used as the above-mentioned rotor 61.

A combustion chamber 31 is partitioned by the cylinder CY and the piston 11. The combustion chamber 31 communicates with an intake passage 22 through an intake port 21, and communicates with an exhaust passage 24 through an exhaust port 23. The intake valve 15 is provided to open and close the intake port 21, and the exhaust valve 16 is provided to open and close the exhaust port 23. The intake valve 15 and the exhaust valve 16 are driven by the valve driver 17. The valve driver 17 is a cam shaft that is rotated in conjunction with the crank shaft 13, for example. A hydraulic valve mechanism, an electromagnetic valve mechanism or the like may be used as the valve driver 17.

The throttle valve SL for adjusting a flow rate of air that flows in from outside is provided at the intake passage 22. As described above, the accelerator grip 42 of Fig. 2 is operated, whereby the opening degree of the throttle valve SL (hereinafter referred to as a throttle opening) is adjusted. A throttle opening sensor SE1 is arranged in the vicinity of the throttle valve SL. The throttle opening sensor SE1 detects the throttle opening.

The ignition device 18 includes an ignition coil 18a and an ignition plug 18b, and is configured to ignite a fuel-air mixture in the combustion chamber 31. The ignition coil 18a is connected to the ignition plug 18b. The ignition coil 18a stores electrical energy for generating spark discharge at the ignition plug 18b.

A fuel pump (not shown) is connected to the injector 19. The injector 19 is configured to inject the fuel supplied from the fuel pump to the intake passage 22. In the present embodiment, the injector 19 is arranged such that the fuel is injected toward the intake port 21.

### (2) Crank Angle Detection Mechanism

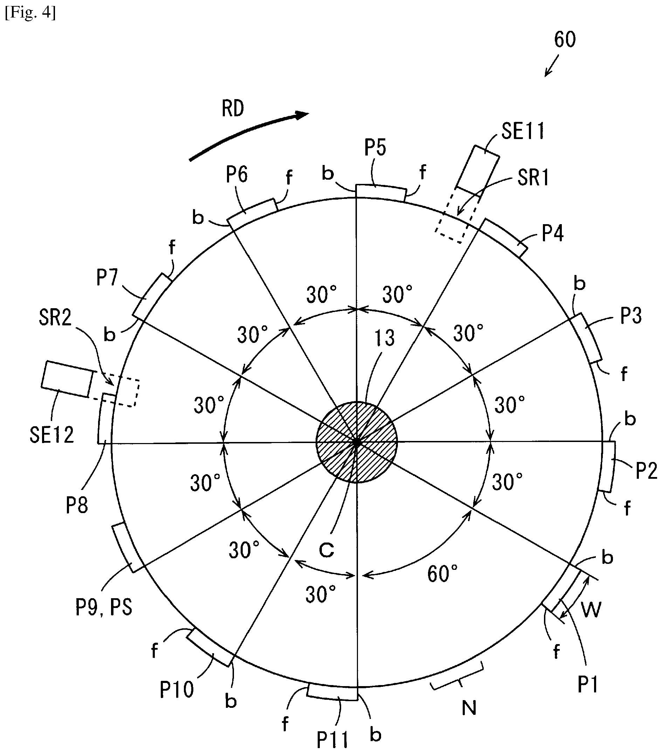

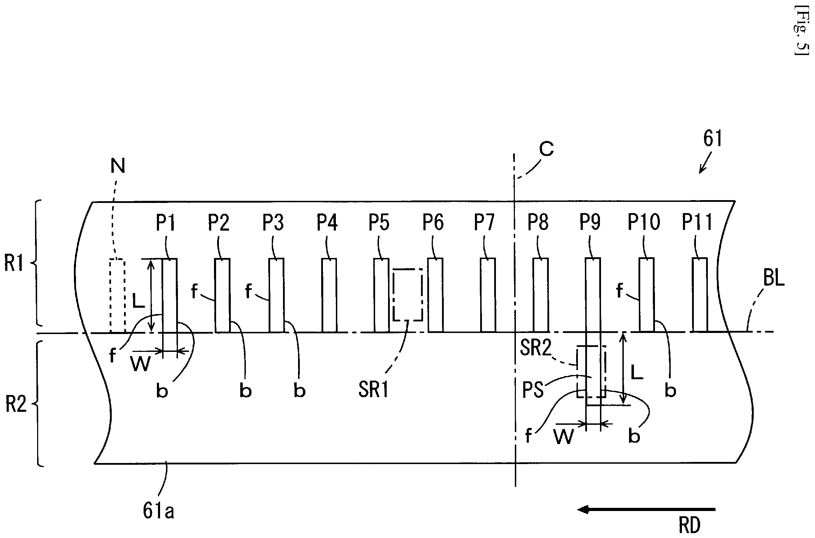

Fig. 4 is a schematic side view for explaining the crank angle detection mechanism 60, and Fig. 5 is a development diagram of the outer peripheral surface 61a of the rotor 61. In Fig. 5, the outer peripheral surface 61a of the rotor 61 is shown as a strip-shaped plane. The crank shaft 13 and the rotor 61 are rotated in a direction indicated by the thick arrows of Figs. 4 and 5 during the rotation of the engine 10. In the following description, the direction in which the thick arrows of Figs. 4 and 5 are directed toward is referred to as a rotation direction RD.

As shown in Fig. 5, the outer peripheral surface 61a of the rotor 61 is divided into substantially equal regions R1, R2 with a boundary line BL that extends in a circumferential direction held therebetween. A toothless portion N is set at a predetermined position in the region R1 of the outer peripheral surface 61a of the rotor 61. Details of the position at which the toothless portion N is set will be described below.

As shown in Figs. 4 and 5, in the region R1 of the outer peripheral surface 61a, detection subjects P1, P2, P3, P4, P5, P6, P7, P8, P9, P10, P11 are sequentially provided to line up from the toothless portion N along the boundary line BL at constant intervals. On the other hand, in the region R2 of the outer peripheral surface 61a, a detection subject PS is provided to be adjacent to one (the detection subject P9 in the present example) of the detection subjects P1 to P11 in a direction parallel with a rotation axis C (hereinafter referred to as an axis direction).

The detection subjects P1 to P11, PS are projections that are formed to project a constant height from the outer peripheral surface 61a. A projection is not present at the toothless portion N. The detection subject PS is integrally formed with the detection subject P9 to extend in the axis direction from the end of the detection subject P9 that comes into contact with the boundary line BL. Further, the detection subjects P1 to P11, PS have a common width W in a circumferential direction of the outer peripheral surface 61a of the rotor 61, and a common length L in the axis direction. Further, each of the detection subjects P1 to P11, PS has a front end f that is positioned on the downstream side, and a rear end b that is positioned on the upstream side in the rotation direction RD.

As shown in Fig. 4, in the present example, the rear ends b of the detection subjects P1 to P11 are arranged on the outer peripheral surface 61a of the rotor 61 at angular intervals of 30 degrees with respect to the rotation axis C. The angular interval between the rear end b of the detection subject P11 and the rear end b of the detection subject P1 that are arranged to sandwich the toothless portion N therebetween is 60 degrees.

The crank angle sensor SE11 and the reference angle sensor SE12 are constituted by an electromagnetic pickup or an optical pick up, for example, and are fixed to a crank case (not shown).

As described above, the detection subjects P1 to P11 are arranged to line up along the boundary line BL that extends in the circumferential direction of the outer peripheral surface 61a of the rotor 61, and the detection subject PS is arranged to be adjacent to the detection subject P9 in the axis direction. Therefore, at the time of rotation of the rotor 61, the detection subjects P1 to P11 move on the common trajectory, and the detection subject PS moves on a trajectory different from the trajectory of the detection subjects P1 to P11.

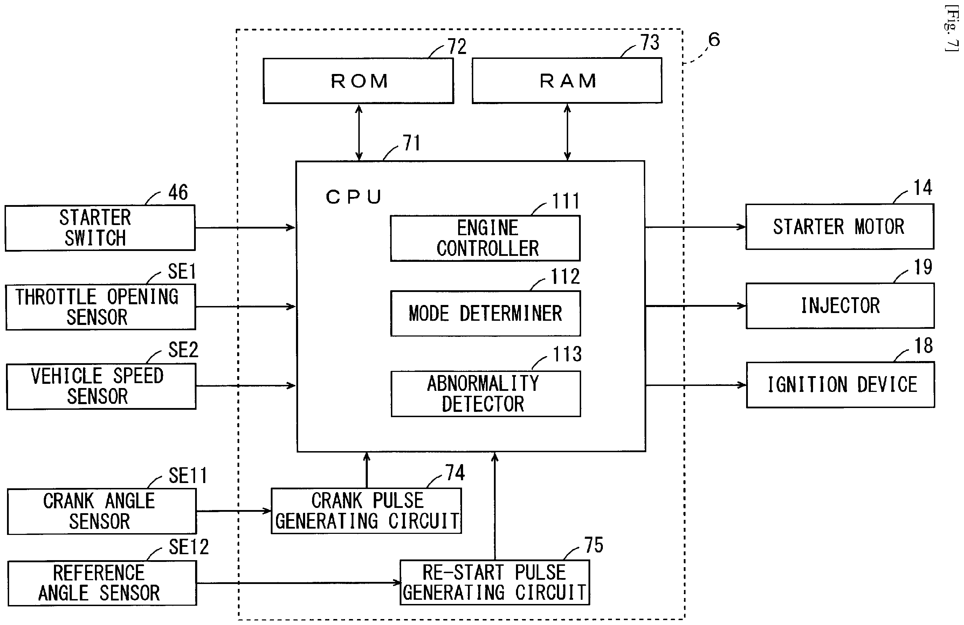

The crank angle sensor SE11 has a detection region SR1 at a fixed position on the trajectory on which the detection subjects P1 to P11 move. Thus, the detection subjects P1 to P11 sequentially pass through the detection region SR1 at the time of the rotation of the rotor 61. In this case, after the front end f of each detection subject P1 to P11 enters the detection region SR1, its rear end b enters the detection region SR1. The crank angle sensor SE11 outputs pulses that respectively correspond to the front end f and the rear end b when the front end f and the rear end b of each detection subject P1 to P11 pass through the detection region SR1. A crank pulse is generated by a below-mentioned crank pulse generating circuit 74 (Fig. 7) based on the pulse that is output when the rear end b of each detection subject P1 to P11 passes through the detection region SR1.

The reference angle sensor SE12 has a detection region SR2 at a fixed position on the trajectory on which the detection subject PS moves. This reference angle sensor SE12 is provided at a position spaced apart from the crank shaft sensor SE11 by an angle larger than 90 degrees and smaller than 120 degrees in an opposite direction to the rotation direction RD. At the time of the rotation of the rotor 61, the detection subject PS passes through the detection region SR2. In this case, after the front end f of the detection subject PS enters the detection region SR2, its rear end b enters the detection region SR2. The reference angle sensor SE12 outputs pulses that respectively correspond to the front end f and the rear end b when the front end f and the rear end b of the detection subject PS pass through the detection region SR2. A re-start pulse is generated by a below-mentioned re-start pulse generating circuit 75 (Fig. 7) based on the pulse that is output when the rear end b of the detection subject PS passes through the detection region SR2.

As described above, the detection subjects P1 to P11 and the detection subject PS are arranged at positions different from each other in a direction along the rotation axis C. Therefore, the trajectory on which the toothless portion N and the detection subjects P1 to P11 move, and the trajectory on which the detection subject PS moves are different. In this case, because the detection region SR1 of the crank angle sensor SE11 is positioned on the trajectory of the detection subjects P1 to P11, false detection of the detection subject PS by the crank angle sensor SE11 is prevented. Further, because the detection region SR2 of the reference angle sensor SE12 is positioned on the trajectory of the detection subject PS, false detection of the detection subjects P1 to P11 by the reference angle sensor SE12 is prevented.

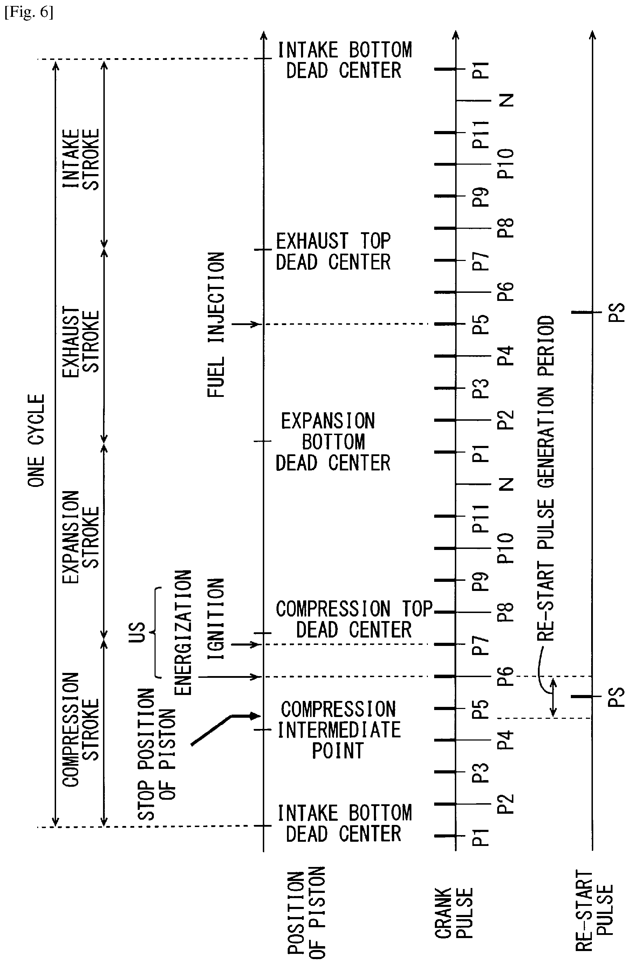

Fig. 6 is a timing chart showing the relation between the position of the piston 11 that changes during one cycle, and the crank pulses and the re-start pulses generated during the one cycle, in the engine 10 of Fig. 3.

In the following description, rotating the engine 10 first by the starter switch 46 is referred to as a start-up of the engine 10. Further, rotating the engine 10 first after the engine 10 is stopped in a below-mentioned idle stop mode is referred to as a re-start of the engine 10. Further, a top dead center through which the piston 11 passes at the time of changing from a compression stroke to an expansion stroke is referred to as a compression top dead center, and a top dead center through which the piston 11 passes at the time of changing from an exhaust stroke to an intake stroke is referred to as an exhaust top dead center. A bottom dead center through which the piston 11 passes at the time of changing from the intake stroke to the compression stroke is referred to as an intake bottom dead center, and a bottom dead center through which the piston 11 passes at the time of changing from the expansion stroke to the exhaust stroke is referred to as an expansion bottom dead center.

First, the start-up of the engine 10 will be described. Generally, in the compression stroke, because the pressure in the cylinder CY increases, the rotational load of the crank shaft 13 increases. Therefore, at the time of stopping the engine 10, the rotation of the crank shaft 13 is likely to be stopped in the compression stroke. Specifically, as indicated by the thick arrow in Fig. 6, the rotation of the crank shaft 13 is likely to be stopped when the piston 11 is positioned at an intermediate point (hereinafter referred to as a compression intermediate point) between the intake bottom dead center and the compression top dead center or a position in the vicinity of the compression intermediate point.

Therefore, at the time of the start-up of the engine 10, the piston 11 moves from the compression intermediate point or a position in the vicinity of the compression intermediate point towards the compression top dead center. Thereafter, the piston 11 sequentially moves to the expansion bottom dead center, the exhaust top dead center and the intake bottom dead center.

The crank pulse is used for controlling a time point for the injection of the fuel and a time point for the ignition of the fuel-air mixture. In the four-stroke engine 10, the rotor 61 is rotated two times per one cycle. Thus, the crank pulses that respectively correspond to the detection subjects P1 to P11 are generated two times per one cycle.

In the present example, the toothless portion N is provided at the outer peripheral surface 61a of the rotor 61 to pass through the detection region SR1 right before the piston 11 reaches the bottom dead center. The angular interval between the rear end b of the detection subject P11 and the rear end b of the detection subject P1 is larger than the angular interval between the rear end b of a detection subject Pn (n is an integer that is not less than 1 and not more than 10) and the rear end b of the detection subject Pn+1. Thus, as shown in Fig. 6, the interval between the crank pulses that respectively correspond to the detection subjects P11, P1 is large as compared to the interval between the crank pulses that respectively correspond to the detection subjects Pn, Pn+1. Therefore, that the toothless portion N passes through the detection region SR1 is detected based on the interval between the two adjacent crank pulses.

In the present example, the detection subject P1 passes through the detection region SR1 first after the toothless portion N passes through the detection region SR1. Further, the detection subject P2 passes through the detection region SR1 second after the toothless portion N passes through the detection region SR1. Therefore, the crank pulses that are generated after the detection of the toothless portion N are counted, whereby the detection subjects P1 to P11 that pass through the detection region SR1 are identified. Thus, the position of the piston 11 is determined based on the crank pulse. That is, the rotation position (the crank angle) of the crank shaft 13 is detected.

As described above, because the pressure in the cylinder CY rapidly increases in the compression stroke, the rotational load of the crank shaft 13 increases. Therefore, the rotation speed of the crank shaft 13 is reduced in a period in which the piston 11 is positioned at the compression top dead center or a position in the vicinity of the compression top dead center (a period US of Fig. 6). On the other hand, a change in rotation speed of the crank shaft 13 is relatively small in a period in which the piston 11 is positioned at the bottom dead center or a position in the vicinity of the bottom dead center. In the present example, as described above, the position of the toothless portion N is set such that the piston 11 passes through the detection region SR1 right before the piston 11 reaches the bottom dead center. Thus, the toothless portion N is accurately detected by the crank angle sensor SE11 even at the time of high-speed rotation of the engine 10. As a result, the control of the engine 10 at the time of the high-speed rotation can be stably performed.

As described above, the rotation position (the crank angle) of the crank shaft 13 is detected, whereby the injector 19 and the ignition device 18 are controlled. In the present example, the detection subject P5 is used as a detection subject for the injection of the fuel. Thus, the injection of the fuel is performed by the injector 19 (Fig. 3) at a time point at which the crank pulse that corresponds to the detection subject P5 is generated in the exhaust stroke. Further, in the present example, the detection subject P6 is used as a detection subject for the ignition of the fuel-air mixture. Thus, the energization to the ignition coil 18a (Fig. 3) is started at a time point at which the crank pulse that corresponds to the detection subject P6 is generated in the compression stroke. Thereafter, the energization to the ignition coil 18a (Fig. 3) is stopped at a time point at which the crank pulse that corresponds to the detection subject P7 is generated. At this time, the ignition plug 18b (Fig. 3) generates spark discharge. In this manner, the ignition of the fuel-air mixture by the ignition device 18 is performed right before the piston 11 reaches the compression top dead center.

Next, the re-start of the engine 10 will be described. Even at the time of stopping the engine 10 in the idle stop mode, the piston 11 is positioned at the compression intermediate point or in the vicinity of the compression intermediate point. Therefore, at the time of the re-start of the engine 10, similarly to the start-up of the engine 10, the piston 11 moves from the compression intermediate point or a position in the vicinity of the compression intermediate point towards the compression top dead center.

As described below, in the idle stop mode, when the abnormal operation of the reference angle sensor SE12 is not detected, the injection of the fuel by the injector 19 is performed in a plurality of cycles including the cycle right before the engine 10 is stopped. Therefore, the fuel-air mixture is kept in the combustion chamber 31 after the stop and before the re-start of the engine 10.

Here, the positional relation between the detection subject PS and the detection region SR2 is set such that the re-start pulse is generated after the crank shaft 13 is started to be rotated and before a time point at which the ignition of the fuel-air mixture is to be performed. Specifically, the positional relation between the detection subject PS and the detection region SR2 is set such that the detection subject PS passes through the detection region SR2 in a period (hereinafter referred to as a re-start pulse generation period) elapsed from the time when the piston 11 is started to move from the compression intermediate point or a position in the vicinity of the compression intermediate point until the time when the detection subject (the detection subject P6 in the present example) for performing the ignition of the fuel-air mixture passes through the detection region SR1.

In the present example, the detection subject PS is arranged at the outer peripheral surface 61a of the rotor 61 such that the detection subject PS passes through the detection region SR2 in a period from the time when the detection subject P5 passes through the detection region SR1 until the time when the detection subject P6 passes through the detection region SR1 in the re-start pulse generation period (see Fig. 5).

In this case, in a period from the time when the crank shaft 13 is started to be rotated until the time when the toothless portion N is detected, the detection subject P6 passes through the detection region SR1 first, and the detection subject P7 passes through the detection region SR1 second after the detection subject PS passes through the detection region SR2. That is, the first crank pulse after the generation of the re-start pulse corresponds to the detection subject P6, and the second crank pulse corresponds to the detection subject P7. Therefore, the crank pulses are counted after the generation of the re-start pulse, whereby the detection subjects P6, P7 that pass through the detection region SR1 are quickly identified. Thus, when an operation abnormality of the reference angle sensor SE12 is not detected, the ignition of the fuel-air mixture by the ignition device 18 is performed based on the crank pulses that respectively correspond to the detection subjects P6, P7 in the first compression stroke after the change from the below-mentioned idle stop mode to the normal mode.

The positional relation between the detection subject PS and the detection region SR2 is set as described above, whereby the detection subject PS is arranged to be detected by the reference angle sensor SE12 when the piston 11 is positioned between the compression intermediate point and the compression top dead center in the present example.

Here, the rotation speed of the crank shaft 13 is low right after the re-start of the engine 10. Therefore, even when the rotation speed of the crank shaft 13 is temporarily reduced because the piston 11 approaches the compression top dead center from the compression intermediate point in the compression stroke, the detection subject PS is accurately detected by the reference angle sensor SE12. Therefore, the detection subject PS is likely to be detected in the first compression stroke by the reference angle sensor SE12 after the rotation of the crank shaft 13 is started in a state in which the engine 10 is stopped, and before the toothless portion N is detected first by the crank angle sensor SE11. Thus, the quick re-start of the engine 10 can be stably performed.

### (3) Control System of Motorcycle

Fig. 7 is a block diagram showing the control system of the motorcycle 100 of Fig. 1. As shown in Fig. 7, the control device 6 of Fig. 1 includes a CPU (Central Process Unit) 71, a ROM (Read Only Memory) 72, a RAM (Random Access Memory) 73, a crank pulse generating circuit 74 and a re-start pulse generating circuit 75.

A vehicle speed sensor SE2 that detects a traveling speed is provided at the motorcycle 100 of Fig. 1. The signals that are respectively output from the starter switch 46, the throttle opening sensor SE1, the vehicle speed sensor SE2 and the main switch (not shown) are supplied to the CPU 71.

The crank pulse generating circuit 74 generates the crank pulse based on the pulse that is output from the crank angle sensor SE11. The crank pulse generated by the crank pulse generating circuit 74 is supplied to the CPU 71.

The re-start pulse generating circuit 75 generates the re-start pulse based on the pulse output from the reference angle sensor SE12. The re-start pulse generated by the re-start pulse generating circuit 75 is supplied to the CPU 71.

The ROM 72 stores control program of the CPU 71 and the like. The RAM 73 stores various data, and functions as a process area of the CPU 71. The CPU 71 realizes the function of an engine controller 111, a mode determiner 112 and an abnormality detector 113 by operating the control program stored in the ROM 72.

Further, the ROM 72 stores the number of times of pre-stop rotation information and the number of injection information. The number of times of pre-stop rotation information includes the number of times of rotation of the crank shaft 13 in a period from the time when the below-mentioned idle stop mode is started until the time when the rotation of the crank shaft is stopped, and is stored in the ROM 72 as a map, for example. The number of times of pre-stop rotation information is obtained in advance by an experiment or the like as the inherent information of the motorcycle 100. The number of times of injection information includes the number of times by which the fuel is to be injected by the injector 19 in the below-mentioned idle stop mode.

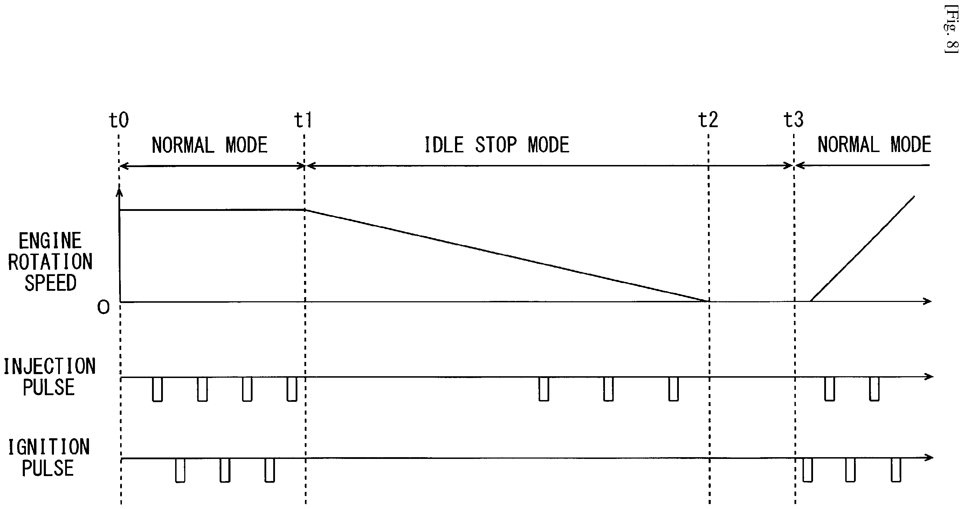

The engine controller 111 supplies the injection pulse (Fig. 8) that instructs the injector 19 the injection of the fuel, and supplies the ignition pulse (Fig. 8) that instructs the ignition device 18 to ignite. The injection pulse is generated in response to the detection (the generation of the crank pulse that corresponds to the detection subject P5) of the rear end b of the detection subject P5 by the crank angle sensor SE11 (Fig. 4). The ignition pulse is generated in response to the detection (the generation of the crank pulses that correspond to the detection subjects P6, P7) of the rear ends b of the detection subjects P6, P7 by the crank angle sensor SE11 (Fig. 4).

In the present example, the energization to the ignition coil 18a (Fig. 3) is started in response to a falling edge of the ignition pulse, and the energization to the ignition coil 18a (Fig. 3) is stopped in response to the rising edge of the ignition pulse. Further, the injector 19 may start the injection of the fuel in response to the falling edge of the injection pulse, and the injector 19 may stop the injection of the fuel in response to the rising edge of the injection pulse. In this case, the injection amount of the fuel can be appropriately adjusted.

The engine controller 111 controls the engine 10 in any one mode of the below-mentioned normal mode and the idle stop mode. In the following description, the condition for the engine controller 111 to change from the normal mode to the idle stop mode is referred to as an idle stop condition. Further, the condition for the engine controller 111 to change from the idle stop mode to the normal mode is referred to as a re-start condition.

The mode determiner 112 determines whether or not the idle stop condition is satisfied in a state in which the engine 10 is controlled by the normal mode. The idle stop condition includes the condition that relates to at least one of the throttle opening, the vehicle speed and the engine rotation speed. The idle stop condition is that the throttle opening detected by the throttle opening sensor SE1 is 0, the traveling speed (the vehicle speed) of the motorcycle 100 detected by the vehicle speed sensor SE2 is 0, and the rotation speed of the engine 10 is larger than 0 rpm and not more than 2500 rpm, for example. The idle stop condition is not limited to the above-mentioned conditions, and may be another condition. For example, the idle stop condition may be that the throttle opening is 0, the traveling speed of the motorcycle 100 is 0, and the brake levers 43, 44 (Fig. 2) are operated.

Further, the mode determiner 112 determines whether or not the re-start condition is satisfied in a state in which the engine 10 is controlled in the idle stop mode. The re-start condition includes the condition that relates to the throttle opening. The re-start condition is that the throttle opening detected by the throttle opening sensor SE1 is larger than 0, for example. The re-start condition is not limited to this, but may be that the operation of the brake levers 43, 44 (Fig. 2) is released instead of the condition that relates to the throttle opening. Alternatively, the re-start condition may be that the operation of the brake levers 43, 44 (Fig. 2) is released in addition to the condition that relates to the throttle opening, for example.

The engine controller 111 controls the engine 10 according to the determination result of the mode determiner 112. Thus, when the idle stop condition is satisfied in the normal mode, the engine controller 111 changes from the normal mode to the idle stop mode. Further, when the re-start condition is satisfied in the idle stop mode, the engine controller 111 changes from the idle stop mode to the normal mode.

The engine controller 111 operates the starter motor 14 in response to the start-up instruction of the engine 10 from the starter switch 46. Further, the engine controller 111 operates the starter motor 14 when the idle stop mode is changed to the normal mode, and controls a time point for the ignition of the fuel-air mixture by the ignition device 18 based on the re-start pulse and the crank pulse.

In the normal mode, the engine controller 111 controls a time point for the injection of the fuel by the injector 19, and a time point for the ignition of the fuel-air mixture by the ignition device 18 based on the crank pulse.

The engine controller 111 stops the ignition of the fuel-air mixture by the ignition device 18 in changing from the normal mode to the idle stop mode.

The abnormality detector 113 detects the operation abnormality of the reference angle sensor SE12 based on the crank pulse and the re-start pulse. Specifically, the abnormality detector 113 detects the operation abnormality of the reference angle sensor SE12 as described below.

As described above, the plurality of detection subjects P1 to P11, PS provided at the rotor 61 are provided on the outer peripheral surface 61a of the rotor 61. Therefore, when the operation abnormality has not occurred at the reference angle sensor SE12, the relation between the number of times of detection of the plurality of detection subjects P1 to P11 by the crank angle sensor SE11, and the number of times of detection of the detection subject PS by the reference angle sensor SE12, in one rotation of the crank shaft 13, is constantly maintained. On the other hand, when the operation abnormality has occurred at the reference angle sensor SE12, the relation between the number of times of detection of the plurality of detection subjects P1 to P11 by the crank angle sensor SE11, and the number of times of detection of the detection subject PS by the reference angle sensor SE12, in one rotation of the crank shaft 13, is different from the above-mentioned constant relation.

From the above-mentioned reason, when the reference angle sensor SE12 normally operates in the present example, the eleven crank pulses and the one re-start pulse are generated while the crank shaft 13 is rotated once. In this case, the one re-start pulse is always detected in a period in which the twelve crank pulses are counted, for example. On the other hand, when an operation abnormality has occurred at the reference angle sensor SE12, zero or more than two re-start pulses may be generated in a period in which the crank shaft 13 performs one rotation. In this case, the re-start pulse is not detected or more than two re-start pulses are detected in a period in which the twelve crank pulses are counted. The abnormality detector 113 detects the operation abnormality of the reference angle sensor SE12 based on the number of times of generation of the crank pulse and the number of times of generation of the re-start pulse in one rotation of the crank shaft 13. Thus, the operation abnormality of the reference angle sensor SE12 is easily and accurately detected.

As described above, at the time of the re-start of the engine 10, the rotation position (the crank angle) of the crank shaft 13 is detected with the detection of the detection subject PS used as a basis. On the other hand, except for at the time of the re-start of the engine 10, the rotation position (the crank angle) of the crank shaft 13 is detected with the detection of the toothless portion N used as a basis.

In the present embodiment, in a case in which the operation abnormality of the reference angle sensor SE12 is not detected by the abnormality detector 113, the engine controller 111 controls a time point for the injection of the fuel by the injector 19 such that the fuel-air mixture for re-start is kept in the combustion chamber 31 of Fig. 3 when the rotation of the crank shaft 13 is stopped after the change from the normal mode to the idle stop mode. Thus, the fuel-air mixture compressed in the first compression stroke after the change from the idle stop mode to the normal mode is ignited, whereby the fuel-air mixture is combusted. Therefore, the re-start of the engine 10 can be quickly performed based on the detection of the detection subject PS by the reference angle sensor SE12.

On the other hand, in a case in which the operation abnormality of the reference angle sensor SE12 is detected by the abnormality detector 113 in the normal mode, the engine controller 111 controls the injector 19 so as not to inject the fuel in the idle stop mode. In this case, air is introduced into the combustion chamber 31 every one cycle until the rotation of the crank shaft 13 is stopped after the change from the normal mode to the idle stop mode. Further, the introduced air is exhausted from the combustion chamber 31 every one cycle. Therefore, at the time of stopping the engine 10 in the idle stop mode, the fuel-air mixture is hardly present in the combustion chamber 31.

Therefore, in the first exhaust stoke after the change from the idle stop mode to the normal mode, the uncombusted air-fuel mixture is inhibited from being exhausted from the combustion chamber 31 in the first exhaust stroke due to the operation abnormality of the reference angle sensor SE12. Thus, wasteful consumption of the fuel is inhibited, and the fuel efficiency is improved. Further, deterioration of a catalyst due to the uncombusted air-fuel mixture is inhibited.

Further, when the injection of the fuel is not performed in the idle stop mode, the detection subject P5 is detected with the detection of the first toothless portion N used as a basis at the time of the re-start of the engine 10, whereby the injection of the fuel is started. Thereafter, the detection subjects P6, P7 are detected in the subsequent compression stroke, whereby the ignition of the fuel-air mixture is performed at an appropriate time point.

While each of the engine controller 111, the mode determiner 112 and the abnormality detector 113 is realized by hardware and software in the example of Fig. 7, the invention is not limited to this. The engine controller 111, the mode determiner 112 and the abnormality detector 113 may be realized by hardware such as an electronic circuit, and part of these constituent elements may be realized by hardware such as a CPU and a memory, and software such as computer program.

### (4) Normal Mode and Idle Stop Mode

As described above, the engine controller 111 of Fig. 7 controls the engine 10 in the normal mode or the idle stop mode. Further, the engine controller 111 performs the different control in the idle stop mode when the operation abnormality of the reference angle sensor SE12 is not detected, and when the operation abnormality of the reference angle sensor SE12 is detected.

Fig. 8 is a timing chart showing one control example of the engine 10 by the normal mode and the idle stop mode when the operation abnormality has not occurred at the reference angle sensor SE12. In Fig. 8, the rotation speed of the engine 10 is shown in the upper column, the injection pulse is shown in the middle column and the ignition pulse is shown in the lower column.

In the example of Fig. 8, the engine 10 is controlled in the normal mode from a time point t0 to a time point t1. In the normal mode, the engine controller 111 respectively supplies the injection pulse and the ignition pulse to the injector 19 and the ignition device 18 every one cycle. Thus, the fuel-air mixture is introduced into the combustion chamber 31 in the intake stroke of each cycle, the fuel-air mixture is compressed in the compression stroke and the fuel-air mixture is combusted in the expansion stroke.

At the time point t1, when the above-mentioned idle stop condition is satisfied, the engine controller 111 changes from the normal mode to the idle stop mode. In the idle stop mode, the engine controller 111 does not generate the ignition pulse. In this case, because the combustion of the fuel-air mixture is not performed, the rotation speed of the engine 10 is gradually reduced, and the rotation of the engine 10 is stopped at a time point t2.

Further, in the idle stop mode, when the operation abnormality of the reference angle sensor SE12 is not detected, the engine controller 111 supplies the injection pulse to the injector 19 in a plurality of cycles (three cycles in the present example) right before the time point t2 at which the engine 10 is stopped. Thus, at the time of stopping the engine 10, the fuel-air mixture for re-start is kept in the combustion chamber 31.

Thereafter, when the above-mentioned re-start condition is satisfied at a time point t3, the engine controller 111 changes from the idle stop mode to the normal mode.

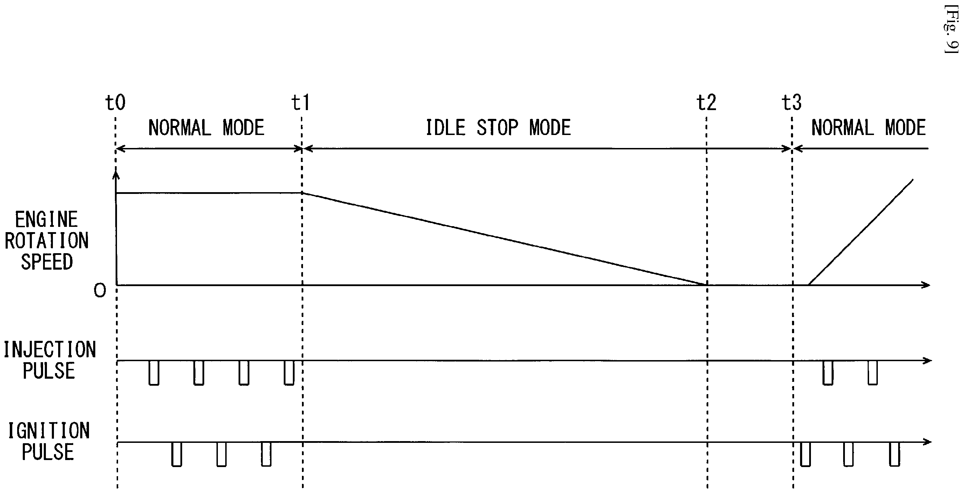

Fig. 9 is a timing chart showing one control example of the engine 10 by the normal mode and the idle stop mode when the operation abnormality has occurred at the reference angle sensor SE12. Also in Fig. 9, similarly to Fig. 8, the rotation speed of the engine 10 is shown in the upper column, the injection pulse is shown in the middle column and the ignition pulse is shown in the lower column.

In the idle stop mode of Fig. 9, the engine controller 111 does not generate the injection pulse when the operation abnormality of the reference angle sensor SE12 is detected. Thus, air is introduced into the combustion chamber 31 instead of the fuel-air mixture. Further, the introduced air is exhausted from the combustion chamber 31.

### (5) Control Example of Engine

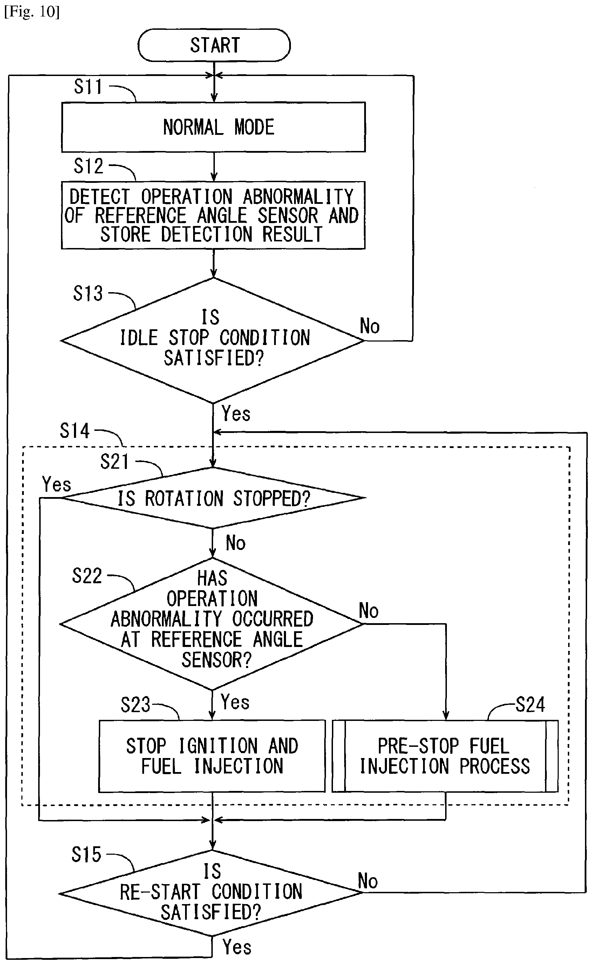

Fig. 10 is a flow chart showing one control example of the engine 10 by the CPU 71 of Fig. 6.

First, the engine controller 111 of the CPU 71 controls the engine 10 in the normal mode after the start-up of the engine 10 by the starter switch 46 (Fig. 2) (step S11). Subsequently, the abnormality detector 113 of the CPU 71 performs the detection of the operation abnormality of the reference angle sensor SE12 based on the crank pulse and the re-start pulse in the normal mode, and the detection result is stored in the RAM 73 of Fig. 7 (step S12).

Next, the mode determiner 112 of the CPU 71 determines whether or not the idle stop condition is satisfied (step S13). When the idle stop condition is not satisfied, the process of step S11 is performed by the engine controller 111, and the control of the engine 10 by the normal mode is continued.

On the other hand, when the idle stop condition is satisfied, the engine controller 111 changes from the normal mode to the idle stop mode (step S14). The process of the engine controller 111 in the idle stop mode includes the processes of the below-mentioned steps S21, S22, S23, S24.

In the idle stop mode, the engine controller 111 determines whether or not the rotation of the crank shaft 13 is stopped (step S21). For example, when the crank pulse is not generated for a predetermined period of time, the engine controller 111 determines that the rotation of the crank shaft 13 is stopped.

When the rotation of the crank shaft 13 is stopped, the engine controller 111 proceeds to the process of below-mentioned step S15. On the other hand, when the rotation of the crank shaft 13 is not stopped, the engine controller 111 determines whether or not the operation abnormality has occurred at the reference angle sensor SE12 based on the detection result stored in the RAM 73 in immediately preceding step S 12 (step S22).

When the operation abnormality has occurred at the reference angle sensor SE12, the engine controller 111 stops the ignition of the fuel-air mixture by the ignition device 18 and the injection of the fuel by the injector 19 (step S23). Specifically, the engine controller 111 does not generate the above-mentioned ignition pulse (Fig. 8) even if the crank pulses (Fig. 6) that correspond to the detection subjects P6, P7 (Fig. 4) are generated. Further, the engine controller 111 does not generate the above-mentioned injection pulse (Fig. 8) even if the crank pulse (Fig. 6) that corresponds to the detection subject P5 (Fig. 4) is generated.

On the other hand, when the operation abnormality has not occurred at the reference angle sensor SE12, the engine controller 111 performs a pre-stop fuel injection process such that the fuel is injected in the plurality of cycles right before the engine 10 is stopped (step S24). The details of the pre-stop fuel injection process will be described below.

After the process of step S23 or step S24 in the idle stop mode, the engine controller 111 determines whether or not the re-start condition is satisfied (step S15). When the re-start condition is not satisfied, the process of the step S 14 is performed by the engine controller 111, and the control of the engine 10 is continued by the idle stop mode. As described above, in the idle stop mode, when the operation abnormality has occurred at the reference angle sensor SE12 during the rotation of the crank shaft 13, the fuel injection is not performed due to the process of step S23. Therefore, the fuel-air mixture is hardly present in the combustion chamber 31 at the time of stopping the engine 10.

When the re-start condition is satisfied in step S15, the process of step S11 is performed by the engine controller 111. Thus, the engine controller 111 changes from the idle stop mode to the normal mode.

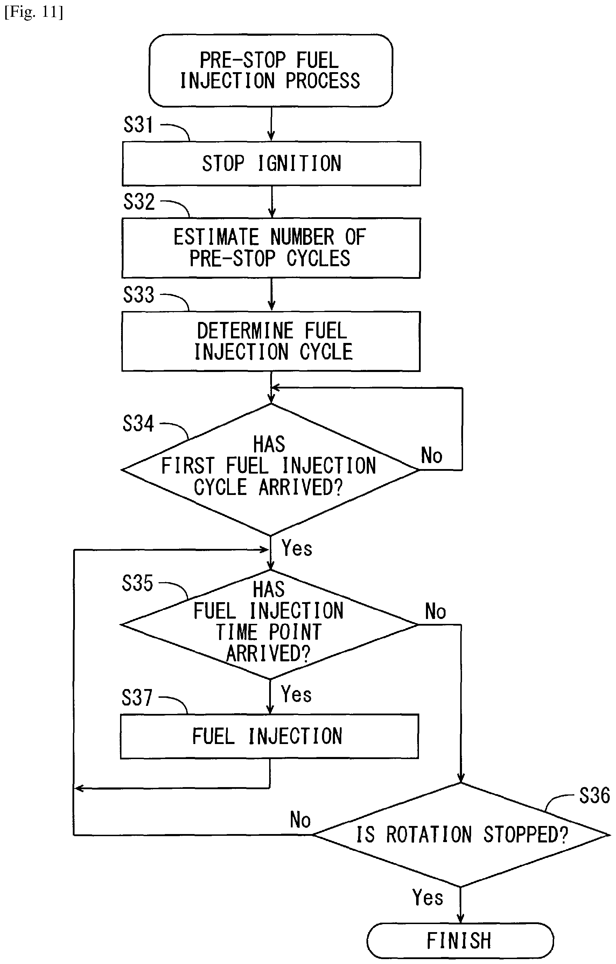

Details of the pre-stop fuel injection process of step S24 will be described. Fig. 11 is a flow chart showing the pre-stop fuel injection process. As shown in Fig. 11, the engine controller 111 first stops the ignition operation by the ignition device 18 (step S31). Specifically, the engine controller 111 does not generate the ignition pulses (Fig. 8) even if the crank pulses (Fig. 6) that correspond to the detection subjects P6, P7 (Fig. 4) are generated.

Next, the engine controller 111 estimates the number of cycles (hereinafter referred to as the number of pre-stop cycles) until the rotation of the crank shaft 13 is stopped based on the number of times of pre-stop rotation information stored in the ROM 72 (step S32). For example, when the number of times of rotation of the crank shaft 13 included in the number of times of pre-stop rotation information is 2m (m is an integer), or (2m +1), the number of pre-stop cycles is estimated to be m.

Next, the engine controller 111 determines the cycles in which the fuel is to be injected (hereinafter referred to as a fuel injection cycle) based on the number of pre-stop cycles that is estimated in step S32 and the number of times of injection information stored in the ROM 72 (step S33). Specifically, the last cycle in which the rotation of the crank shaft 13 is stopped is estimated based on the estimated number of pre-stop cycles. The plurality of consecutive cycles that include the estimated last cycle is determined as the fuel injection cycle. The number of the fuel injection cycles is set to be equal to the number of times by which the fuel is to be injected that is included in the number of times of injection information.

In this case, the estimated last cycle and the plurality of cycles before the estimated last cycle may be determined as the fuel injection cycles. For example, in a case in which the number of pre-stop cycles is m, and the number of times by which the fuel is to be injected that is included in the number of times of injection information is x (x is an integer that is not less than two), the cycles from the cycle {m-(x-1)} to the cycle m after starting of the idle stop mode are determined as the fuel injection cycles. For example, when the value m is 10, and the value x is 3, the cycles from the eighth cycle to the tenth cycle after the idle stop mode is started is determined as the fuel injection cycles.

Next, the engine controller 111 determines whether or not the first fuel injection cycle of the plurality of fuel injection cycles determined in step S33 has arrived based on the crank pulse from the crank pulse generating circuit 74 (step S34).

In a case in which the first fuel injection cycle has not arrived, the engine controller 111 repeats the process of step S34. When the first fuel injection cycle has arrived, the engine controller 111 determines whether or not a time point for the injection of the fuel has arrived based on the crank pulse from the crank pulse generating circuit 74 (step S35). A time point for the injection of the fuel is a time point at which the crank pulse (Fig. 6) that corresponds to the detection subject P5 (Fig. 4) is generated similarly to the normal mode.

In a case in which the time point for the injection of the fuel has not arrived, the engine controller 111 determines whether or not the rotation of the crank shaft 13 is stopped (step S36). For example, in a case in which the crank pulse is not generated for a predetermined period of time, the engine controller 111 determines that the rotation of the crank shaft 13 is stopped. In a case in which the rotation of the crank shaft 13 is not stopped, the engine controller 111 returns to the process of step S35. The engine controller 111 repeats the processes of step S35 and step S36 until a time point for the injection of the fuel arrives, or until the rotation of the crank shaft 13 is stopped.

When a time point for the injection of the fuel arrives in step S35, the engine controller 111 let the injector 19 inject the fuel by supplying the injection pulse to the injector 19 (step S37). Thereafter, the engine controller 111 returns to the process of step S35 and repeats the processes of step S35 and step S36 until a time point for the injection of the fuel in the next fuel injection cycle arrives, or until the rotation of the crank shaft 13 is stopped. In step S36, when the rotation of the crank shaft 13 is stopped, the engine controller 111 finishes the pre-stop fuel injection process.

A series of processes of steps S11 to S15 of Fig. 10 is started at a time point at which the supply of electrical power to an electrical system such as a control device 6, for example, is started (at a time point at which the main switch is turned on), and is finished at a time point at which the supply of electrical power is stopped (a time point at which the main switch is turned off).

### (6) Effects

In the present embodiment, in a case in which the operation abnormality of the reference angle sensor SE12 is not detected by the abnormality detector 113, the fuel-air mixture is kept in the combustion chamber 31 when the rotation of the crank shaft 13 is stopped after the change from the normal mode to the idle stop mode. In this state, the ignition device 18 is controlled based on the detection of the detection subject PS by the reference angle sensor SE12 such that the fuel-air mixture compressed in the first compression stroke after the change from the idle stop mode to the normal mode is ignited. Thus, the fuel-air mixture kept in the combustion chamber 31 is combusted. As a result, the re-start of the engine 10 after the idle stop can be quickly performed.

On the other hand, in a case in which the operation abnormality of the reference angle sensor SE12 is detected by the abnormality detector 113, the injection of the fuel by the injector 19 is not performed in the idle stop mode. In this case, air is introduced into the combustion chamber 31 until the engine 10 is stopped after the change from the normal mode to the idle stop mode. Further, the introduced air is exhausted from the combustion chamber 31. Therefore, the fuel-air mixture is hardly present in the combustion chamber 31 when the rotation of the crank shaft 13 is stopped. Thus, the uncombusted air-fuel mixture is inhibited from being exhausted from the combustion chamber 31 in the first exhaust stroke after the change from the idle stop mode to the normal mode. Thus, wasteful consumption of the fuel is inhibited, and the fuel efficiency is improved. Further, deterioration of a catalyst due to the uncombusted air-fuel mixture is inhibited.

As described above, in a case in which the operation abnormality of the reference angle sensor SE12 is not detected by the abnormality detector 113, the injection pulse is supplied to the injector 19 in the plurality of cycles right before the engine 10 is stopped. Here, the number of times by which the fuel is to be injected after the normal mode is changed to the idle stop mode is preferably set to be less than the estimated number of pre-stop cycles. In this case, the injection amount of fuel in the idle stop mode can be reduced. Thus, the fuel efficiency of the motorcycle 100 is further improved.

### (7) Other Embodiments

(7-1) While the number of times of rotation of the crank shaft 13 in a period from the time when the idle stop mode is started until the time when the rotation of the crank shaft 13 is stopped is stored in advance, the number of cycles in the idle stop mode is estimated in the pre-stop fuel injection process based on the stored number of times of rotation, the cycle in which the fuel is to be injected is determined based on the estimated number of cycles in the above-mentioned embodiment, the invention is not limited to this.
   For example, the number of cycles in a period from the time when the idle stop mode is started until the time when the rotation of the crank shaft 13 is stopped may be obtained in advance by an experiment or the like, and the obtained number of cycles may be stored in advance. In this case, the cycle in which the fuel is to be injected is determined in the pre-stop fuel injection process based on the stored number of cycle.
   Further, the number of cycles in a period from the time when the idle stop mode is started to the cycle in which the fuel is to be injected, and the number of times by which the fuel is to be injected may be stored in advance. In this case, in the pre-stop fuel injection process, the injection of the fuel is controlled based on the stored number of cycles and the number of times.
   Further, the number of times of rotation of the crank shaft 13 or the number of cycles in the idle stop mode may be stored in advance, and the stored number of times of rotation and the number of cycles may be corrected according to the traveling condition of the motorcycle 100 and the injection of the fuel may be controlled based on the corrected number of times of rotation or the number of cycles in the pre-stop fuel injection process. Alternatively, a plurality of patterns may be stored in advance as the number of times of rotation of the crank shaft 13 or the number of cycles in the idle stop mode, one pattern may be selected from the plurality of these patterns according to the traveling condition of the motorcycle 100 and the injection of the fuel may be controlled based on the number of times of rotation or the number of cycles of the selected pattern. In these cases, because the injection of the fuel is controlled according to the traveling state of the motorcycle 100, the re-start of the engine 10 can be quickly performed under various conditions.
(7-2) While the number of times by which the fuel is to be injected (the number of cycles in which the fuel is to be injected) in the idle stop mode is determined in advance in the pre-stop fuel injection process in the above-mentioned embodiment, the invention is not limited to this. The injector 19 may be controlled such that only the cycle in which the fuel is to be first injected is determined and the fuel is injected in each cycle in a period from the cycle until the time when the rotation of the crank shaft 13 is actually stopped.
(7-3) While the injection of the fuel by the injector 19 is performed in the plurality of cycles that include the cycle right before the engine 10 is stopped in the pre-stop fuel injection process in the above-mentioned embodiment, the invention is not limited to the above-mentioned example. The injection of the fuel by the injector 19 may be performed only in the cycle right before the engine 10 is stopped.
(7-4) While the fuel injection by the injector 19 is performed with the intake port 21 being closed in the above-mentioned embodiment, the state of the intake port 21 obtained when the fuel injection is performed is not limited to the above-mentioned example. If the fuel-air mixture can be kept in the combustion chamber 31 at the time of the idle stop, the fuel injection by the injector 19 may be performed with the intake port 21 being open in the intake stroke.
(7-5) While the detection subject PS is integrally formed with the detection subject P9 in the above-mentioned embodiment, the invention is not limited to this. The detection subject PS may be integrally formed with any one of other detection subjects P1 to P8, P10, P11 except for the detection subject P9, or may be separately formed from the detection subjects P1 to P11.
(7-6) While the rear wheel 7 is driven by the engine 10 in the above-mentioned embodiment, the invention is not limited to this. The front wheel 3 may be driven by the engine 10.
(7-7) While the above-mentioned embodiment is an example in which the present invention is applied to the engine system ES that includes a single-cylinder engine, the invention is not limited to this. The present invention may be applied to another engine system that includes a multi-cylinder engine.
(7-8) While the above-mentioned embodiment is an example in which the present invention is applied to the motorcycle, the invention is not limited to this. The present invention may be applied to another saddle-straddling type motor vehicle such as a motor tricycle, an ATV (All Terrain Vehicle) or the like.
(7-9) In the above-mentioned embodiment, the toothless portion N that passes through the detection region SR1 is detected in order to identify the detection subjects P1 to P11 that pass through the detection region SR1. The configuration to be detected in order to identify the detection subjects P1 to P11 is not limited to the toothless portion N. A projection for identification that has a detectable shape to be differentiated from the detection subjects P1 to P11 by the crank angle sensor SE11 may be provided in the region R1 of the outer peripheral surface 61a of the rotor 61. As the projection for identification, a projection that has a width W larger than the detection subjects P1 to P11 in a circumferential direction (or a projection that has a smaller width W in a circumferential direction) or the like can be used, for example.

### (8) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the engine system ES is an example of an engine system, the cylinder CY is an example of a cylinder, the combustion chamber 31 is an example of a combustion chamber, the intake passage 22 is an example of an intake passage, the injector 19 is an example of a fuel injection device, the ignition device 18 is an example of an ignition device and the crank shaft 13 is an example of a crank shaft.

Further, the detection subject PS is an example of a first detection subject, the reference angle sensor SE12 is an example of a first detector, the engine 10 is an example of an engine and a single-cylinder engine, the engine controller 111 and the mode determiner 112 are examples of a controller and the abnormality detector 113 is an example of an abnormality detector.

Further, the rotor 61 is an example of a rotation member, the toothless portion N is an example of a reference detection subject, the plurality of detection subjects P1 to P11 are examples of a plurality of second detection subjects, the crank sensor SE11 is an example of a second detector, the detection subject P6 is an example of a detection subject for ignition, the rotation axis C of the crank shaft 13 is an example of a rotation axis of the rotation member, the detection region SR2 is an example of a first detection region and the detection region SR1 is an example of a second detection region. Further, the motorcycle 100 is an example of a saddle-straddling type motor vehicle, the rear wheel 7 is an example of a drive wheel and the vehicle body 1 is an example of a main body.

As each of various elements recited in the claims, various other elements having configurations or functions described in the claims can be also used.

### Industrial Applicability

The present invention can be effectively utilized for various types of vehicles.

## Claims

1. An engine system (ES) comprising:
an engine (10) that has a fuel injection device (19) for injecting fuel into an intake passage (22) for leading air into a combustion chamber (31) of a cylinder (CY) to produce a fuel-air mixture, an ignition device (18) for igniting the fuel-air mixture in the combustion chamber (31), a first detection subject (PS) provided to be rotated together with a crank shaft (13), a first detector (SE12) provided to detect the first detection subject (PS);
a controller (6, 111, 112) configured to control the engine (10) in a normal mode in which ignition of the fuel-air mixture by the ignition device (18) is performed, and in an idle stop mode in which the ignition of the fuel-air mixture by the ignition device (18) is not performed; and
an abnormality detector (113) configured to detect an operation abnormality of the first detector (SE12), wherein
the ignition device (18) is controlled to ignite the fuel-air mixture compressed in a first compression stroke after a change from the idle stop mode to the normal mode based on detection of the first detection subject (PS) by the first detector (SE12), and
the fuel injection device (19) is controlled, in a case in which the operation abnormality of the first detector (SE12) is not detected by the abnormality detector (113), so as to inject the fuel into the intake passage (22) in one cycle or a plurality of cycles right before the rotation of the crank shaft (13) is stopped such that the fuel-air mixture is kept in the combustion chamber (31) when the rotation of the crank shaft (13) is stopped in the idle stop mode, and is controlled, in a case in which the operation abnormality of the first detector (SE12) is detected by the abnormality detector (113), so as not to inject the fuel in the idle stop mode, wherein
the engine (10) further includes a rotation member (61), a reference detection subject (N), a plurality of second detection subjects (P1 - P11) and a second detector (SE11),
the rotation member (61) is configured to be rotated together with the crank shaft (13),
the reference detection subject (N) and the plurality of second detection subjects (P1 - P11) are arranged at the rotation member (61) in a rotation direction of the rotation member (61), and the plurality of second detection subjects (P1 - P11) include a detection subject (P6) for ignition,
the first detector (SE12) is provided at a first fixed position to be capable of detecting the first detection subject (PS) at the time of rotation of the rotation member (61),
the second detector (SE11) is provided at a second fixed position to be capable of sequentially detecting the reference detection subject (N) and the plurality of second detection subjects (P1 - P11) at the time of the rotation of the rotation member (61),
the first detection subject (PS) is arranged to be detected by the first detector (SE12) in the compression stroke,
the reference detection subject (N) is arranged to be detected by the second detector (SE11) in any one stroke of an intake stroke, an expansion stroke and an exhaust stroke,
the controller (6, 111, 112) is capable of identifying detection of the detection subject (P6) for ignition by the second detector (SE11) based on detection of the reference detection subject (N) by the second detector (SE11), and is capable of identifying detection of the detection subject (P6) for ignition by the second detector (SE11) based on detection of the first detection subject (PS) by the first detector (SE12) in a case in which the first detection subject (PS) is detected by the first detector (SE12) before the reference detection subject (N) is first detected by the second detector (SE11) after rotation of the crank shaft (13) is started in an engine stop state, and
the ignition device (18) is controlled to ignite the fuel-air mixture compressed in the compression stroke in response to detection of the identified detection subject for ignition (P6).

2. The engine system according to claim 1, wherein
the first detection subject (PS) is provided at the rotation member (61) to be arranged at a position different from the reference detection subject (N) and the plurality of second detection subjects (P1 - P11) in a direction along a rotation axis of the rotation member (61), and
the first fixed position is different from the second fixed position in the direction along the rotation axis of the rotation member (61).

3. The engine system (ES) according to claim 1 or 2, wherein
the abnormality detector (113) is configured to detect the operation abnormality of the first detector (SE12) based on detection of the first detection subject (PS) by the first detector (SE12) and detection of the plurality of second detection subjects (P1 - P11) by the second detector (SE11) in the normal mode.

4. The engine system (ES) according to claim 2 or 3, wherein
the first detector (SE12) has a first detection region (SR2) at a fixed position on a trajectory on which the first detection subject (PS) passes with rotation of the rotation member (61), and is configured to detect the first detection subject (PS) when the first detection subject (PS) passes through the first detection region (SR2), and
the second detector (SE11) has a second detection region (SR1) at a fixed position on a trajectory on which the reference detection subject (N) and the plurality of second detection subjects (P1 - P11) pass with rotation of the rotation member (61), is configured to detect each second detection subject (P1 - P11) when each second detection subject (P1- P11) passes through the second detection region (SR1), and is configured to detect the reference detection subject (N) when the reference detection subject (N) passes through the second detection region (SR1).

5. The engine system (ES) according to any one of claims 1 to 4, wherein
the first detection subject (PS) is arranged to be detected by the first detector (SE12) when a piston (11) is at a position closer to a top dead center than an intermediate position between a bottom dead center and the top dead center, and
the reference detection subject (N) is arranged to be detected by the second detector (SE11) when the piston (11) is at a position closer to the bottom dead center than the intermediate position.

6. The engine system (ES) according to any one of claims 1 to 5, wherein
the engine (10) is a single-cylinder engine.

7. The engine system (ES) according to any one of claims 1 to 6, wherein
the controller (6, 111, 112) is configured to change from the normal mode to the idle stop mode when a predetermined idle stop condition is satisfied.

8. The engine system (ES) according to claim 7, wherein
the idle stop condition includes a condition that relates to at least one of a throttle opening, a vehicle speed and an engine rotation speed.

9. The engine system (ES) according to any one of claims 1 to 8, wherein
the controller (6, 111, 112) is configured to change from the idle stop mode to the normal mode when a predetermined re-start condition is satisfied.

10. The engine system (ES) according to claim 9, wherein
the re-start condition includes a condition that relates to the throttle opening.

11. A saddle-straddling type motor vehicle (100) comprising:
a main body (1) that has a drive wheel (7); and
the engine system (ES) according to any one of claims 1 to 10 that is configured to generate power for rotating the drive wheel (7).

## Patentansprüche

1. Ein Motorsystem (ES), das folgende Merkmale aufweist:
einen Motor (10), der eine Kraftstoffeinspritzvorrichtung (19) zum Einspritzen von Kraftstoff in einen Einlassdurchgang (22) zum Führen von Luft in eine Verbrennungskammer (31) eines Zylinders (CY), um ein Kraftstoff-Luft-Gemisch zu erzeugen, eine Zündungsvorrichtung (18) zum Zünden des Kraftstoff-Luft-Gemisches in der Verbrennungskammer (31), ein erstes Erfassungsobjekt (PS), der dazu bereitgestellt ist, gemeinsam mit einer Kurbelwelle (13) gedreht zu werden, einen ersten Detektor (SE12), der dazu bereitgestellt ist, das erste Erfassungsobjekt (PS) zu erfassen;
eine Steuerung (6, 111, 112), die dazu ausgebildet ist, den Motor (10) in einem Normalmodus, in dem eine Zündung des Kraftstoff-Luft-Gemisches durch die Zündungsvorrichtung (18) durchgeführt wird, und in einem Leerlaufstoppmodus zu steuern, in dem die Zündung des Kraftstoff-Luft-Gemisches durch die Zündungsvorrichtung (18) nicht durchgeführt wird; und
einen Abnormitätsdetektor (113), der dazu ausgebildet ist, eine Betriebsabnormität des ersten Detektors (SE12) zu erfassen, wobei
die Zündungsvorrichtung (18) dazu gesteuert wird, das Kraftstoff- Luft-Gemisch, das in einem ersten Verdichtungshub verdichtet wird, nach einem Wechsel von dem Leerlaufstoppmodus zu dem Normalmodus auf der Basis einer Erfassung des ersten Erfassungsobjekts (PS) durch den ersten Detektor (SE12) zu zünden, und
die Kraftstoffeinspritzvorrichtung (19) dazu gesteuert ist, in einem Fall, in dem die Betriebsabnormität des ersten Detektors (SE12) nicht durch den Abnormitätsdetektor (113) erfasst wird, den Kraftstoff in den Einlassdurchgang (22) in einem Zyklus oder einer Mehrzahl von Zyklen einzuspritzen, kurz bevor die Drehung der Kurbelwelle (13) gestoppt wird, so dass das Kraftstoff-Luft-Gemisch in der Verbrennungskammer (31) gehalten wird, wenn die Drehung der Kurbelwelle (13) in dem Leerlaufstoppmodus gestoppt wird, und dazu gesteuert, in einem Fall, in dem die Betriebsabnormität des ersten Detektors (SE12) durch den Abnormitätsdetektor (113) erfasst wird, den Kraftstoff in dem Leerlaufstoppmodus nicht einzuspritzen, wobei
der Motor (10) ferner ein Drehbauglied (61), ein Referenzerfassungsobjekt (N), eine Mehrzahl von zweiten Erfassungsobjekten (P1 - P11) und einen zweiten Detektor (SE11) umfasst,
das Drehbauglied (61) dazu ausgebildet ist, sich gemeinsam mit der Kurbelwelle (13) zu drehen,
das Referenzerfassungsobjekt (N) und die Mehrzahl von zweiten Erfassungsobjekten (P1 - P11) in einer Drehrichtung des Drehbauglieds (61) an dem Drehbauglied (61) angeordnet sind, und die Mehrzahl von zweiten Erfassungsobjekten (P1- P11) ein Erfassungsobjekt (P6) zur Zündung umfassen,
der erste Detektor (SE12) an einer ersten festen Position dazu bereitgestellt ist, das erste Erfassungsobjekt (PS) zu dem Zeitpunkt der Drehung des Drehbauglieds (61) erfassen zu können,
der zweite Detektor (SE11) an einer zweiten festen Position dazu bereitgestellt ist,
das Referenzerfassungsobjekt (N) und die Mehrzahl von zweiten Erfassungsobjekten (P1 - P11) zu dem Zeitpunkt der Drehung des Drehbauglieds (61) sequenziell erfassen zu können,
das erste Erfassungsobjekt (PS) dazu angeordnet ist, in dem Verdichtungshub durch den ersten Detektor (SE12) erfasst zu werden,
das Referenzerfassungsobjekt (N) dazu angeordnet ist, in einem Hub aus einem Einlasshub, einem Ausdehnungshub und einem Auslasshub durch den zweiten Detektor (SE11) erfasst zu werden,
die Steuerung (6, 111, 112) dazu in der Lage ist, eine Erfassung des Erfassungsobjekts (P6) zur Zündung durch den zweiten Detektor (SE11) auf der Basis einer Erfassung des Referenzerfassungsobjekts (N) durch den zweiten Detektor (SE11) zu identifizieren, und dazu in der Lage ist, eine Erfassung des Erfassungsobjekts (P6) zur Zündung durch den zweiten Detektor (SE11) auf der Basis einer Erfassung des ersten Erfassungsobjekts (PS) durch den ersten Detektor (SE12) in einem Fall zu identifizieren, in dem das erste Erfassungsobjekt (PS) durch den ersten Detektor (SE12) erfasst wird, bevor das Referenzerfassungsobjekt (N) erstmals durch den zweiten Detektor (SE11) erfasst wird, nachdem eine Drehung der Kurbelwelle (13) in einem Motorstoppzustand gestartet wird, und
die Zündungsvorrichtung (18) dazu gesteuert ist, das Kraftstoff-Luft-Gemisch, das in dem Verdichtungshub verdichtet wird, ansprechend auf eine Erfassung des identifizierten Erfassungsobjekts zur Zündung (P6) zu zünden.

2. Das Motorsystem gemäß Anspruch 1, bei dem
das erste Erfassungsobjekt (PS) an dem Drehbauglied (61) bereitgestellt ist, um an einer Position angeordnet zu sein, die sich von dem Referenzerfassungsobjekt (N) und der Mehrzahl von zweiten Erfassungsobjekten (P1 - P11) in einer Richtung entlang einer Drehachse des Drehbauglieds (61) unterscheidet, und
sich die erste feste Position von der zweiten festen Position in der Richtung entlang der Drehachse des Drehbauglieds (61) unterscheidet.

3. Das Motorsystem (ES) gemäß Anspruch 1 oder 2, bei dem
der Abnormitätsdetektor (113) dazu ausgebildet ist, die Betriebsabnormität des ersten Detektors (SE12) auf der Basis einer Erfassung des ersten Erfassungsobjekts (PS) durch den ersten Detektor (SE12) und einer Erfassung der Mehrzahl von zweiten Erfassungsobjekten (P1 - P11) durch den zweiten Detektor (SE11) in dem Normalmodus zu erfassen.

4. Das Motorsystem (ES) gemäß Anspruch 2 oder 3, bei dem
der erste Detektor (SE12) einen ersten Erfassungsbereich (SR2) an einer festen Position auf einer Bahn aufweist, auf der das erste Erfassungsobjekt (PS) mit einer Drehung des Drehbauglieds (61) verläuft, und ist dazu ausgebildet, das erste Erfassungsobjekt (PS) zu erfassen, wenn das erste Erfassungsobjekt (PS) durch den ersten Erfassungsbereich (SR2) verläuft, und
der zweite Detektor (SE11) einen zweiten Erfassungsbereich (SR1) an einer festen Position auf einer Bahn aufweist, auf der das Referenzerfassungsobjekt (N) und die Mehrzahl von zweiten Erfassungsobjekten (P1 - P11) mit einer Drehung des Drehbauglieds (61) verlaufen, dazu ausgebildet ist, jedes zweite Erfassungsobjekt (P1 - P11) zu erfassen, wenn jedes zweite Erfassungsobjekt (P1 - P11) durch den zweiten Erfassungsbereich (SR1) verläuft und dazu ausgebildet ist, das Referenzerfassungsobjekt (N) zu erfassen, wenn das Referenzerfassungsobjekt (N) durch den zweiten Erfassungsbereich (SR1) verläuft.

5. Das Motorsystem (ES) gemäß einem der Ansprüche 1 bis 4, bei dem
das erste Erfassungsobjekt (PS) dazu angeordnet ist, durch den ersten Detektor (SE12) erfasst zu werden, wenn sich ein Kolben (11) an einer Position befindet, die näher zu einem oberen Totpunkt ist als eine Zwischenposition zwischen einem unteren Totpunkt und dem oberen Totpunkt, und
das Referenzerfassungsobjekt (N) dazu angeordnet ist, durch den zweiten Detektor (SE11) erfasst zu werden, wenn sich der Kolben (11) an einer Position befindet, die näher zu dem unteren Totpunkt ist als die Zwischenposition.

6. Das Motorsystem (ES) gemäß einem der Ansprüche 1 bis 5, bei dem der Motor (10) ein Einzylindermmotor ist.

7. Das Motorsystem (ES) gemäß einem der Ansprüche 1 bis 6, bei dem
die Steuerung (6, 111, 112) dazu ausgebildet ist, von dem Normalmodus zu dem Leerlaufstoppmodus zu wechseln, wenn eine vorbestimmte Leerlaufstoppbedingung erfüllt ist.

8. Das Motorsystem (ES) gemäß Anspruch 7, bei dem
die Leerlaufstoppbedingung eine Bedingung umfasst, die sich auf zumindest eine einer Drosselöffnung, einer Fahrzeuggeschwindigkeit und einer Motordrehgeschwindigkeit bezieht.

9. Das Motorsystem (ES) gemäß einem der Ansprüche 1 bis 8, bei dem
die Steuerung (6, 111, 112) dazu ausgebildet ist, von dem Leerlaufstoppmodus zu dem Normalmodus zu wechseln, wenn eine vorbestimmte Neustartbedingung erfüllt ist.

10. Das Motorsystem (ES) gemäß Anspruch 9, bei dem
die Neustartbedingung eine Bedingung umfasst, die sich auf die Drosselöffnung bezieht.

11. Ein Fahrzeug vom Sattel-Grätschsitztyp (100), das folgende Merkmale aufweist:
einen Hauptkörper (1), der ein Antriebsrad (7) aufweist; und
das Motorsystem (ES) gemäß einem der Ansprüche 1 bis 10, das dazu ausgebildet ist, Leistung zum Drehen des Antriebsrads (7) zu erzeugen.

## Revendications

1. Système de moteur (ES) comprenant:
un moteur (10) qui présente un dispositif d'injection de carburant (19) destiné à injecter du carburant dans un passage d'admission (22) pour conduire de l'air vers une chambre de combustion (31) d'un cylindre (CY) pour produire un mélange carburant-air, un dispositif d'allumage (18) destiné à allumer le mélange carburant-air dans la chambre de combustion (31), un premier élément de détection (PS) prévu de manière à tourner ensemble avec un vilebrequin (13), un premier détecteur (SE 12) prévu pour détecter le premier élément de détection (PS);
un moyen de commande (6, 111, 112) configuré pour commander le moteur (10) dans un mode normal dans lequel est réalisé l'allumage du mélange carburant-air par le dispositif d'allumage (18), et dans un mode d'arrêt au ralenti dans lequel n'est pas réalisé l'allumage du mélange carburant-air par le dispositif d'allumage (18); et
un détecteur d'anomalie (113) configuré pour détecter une anomalie de fonctionnement du premier détecteur (SE 12), dans lequel
le dispositif d'allumage (18) est commandé pour allumer le mélange carburant-air comprimé au cours d'une première course de compression après un passage du mode d'arrêt au ralenti au mode normal sur base de la détection du premier élément de détection (PS) par le premier détecteur (SE 12), et
le dispositif d'injection de carburant (19) est commandé, au cas où l'anomalie de fonctionnement du premier détecteur (SE12) n'est pas détectée par le détecteur d'anomalie (113), pour injecter le carburant dans le passage d'admission (22) en un seul cycle ou en une pluralité de cycles immédiatement avant que la rotation du vilebrequin (13) ne soit arrêtée, de sorte que le mélange carburant-air soit maintenu dans la chambre de combustion (31) lorsque la rotation du vilebrequin (13) est arrêtée dans le mode d'arrêt au ralenti, et est commandé, au cas où l'anomalie de fonctionnement du premier détecteur (SE12) est détectée par le détecteur d'anomalie (113). de manière à ne pas injecter le carburant dans le mode d'arrêt au ralenti, dans lequel
le moteur (10) comporte par ailleurs un élément de rotation (61), un élément de détection de référence (N), une pluralité de deuxièmes éléments de détection (P1 à P11) et un deuxième détecteur (SE11),
l'élément de rotation de référence (61) est configuré pour tourner ensemble avec le vilebrequin (13),
l'élément de détection de référence (N) et la pluralité de deuxièmes éléments de détection (P1 à P11) sont disposés sur l'élément de rotation (61) dans un sens de rotation de l'élément de rotation (61), et la pluralité de deuxième éléments de détection (P1 à P11) comportent un élément de détection (P6) pour l'allumage,
le premier détecteur (SE 12) est prévu en une première position fixe pour pouvoir détecter le premier élément de détection (PS) au moment de la rotation de l'élément de rotation (61),
le deuxième détecteur (SE11) est prévu en une deuxième position fixe pour pouvoir détecter en séquence l'élément de détection de référence (N) et la pluralité de deuxièmes éléments de détection (P1 à P11) au moment de la rotation de l'élément de rotation (61),
le premier élément de détection (PS) est disposé de manière à être détecté par le premier détecteur (SE 12) au cours de la course de compression,
l'élément de détection de référence (N) est disposé de manière à être détecté par le deuxième détecteur (SE11) au cours de l'une ou l'autre course parmi une course d'admission, une course d'expansion et une course d'échappement,
le moyen de commande (6, 111, 112) est à même d'identifier la détection de l'élément de détection (P6) pour l'allumage par le deuxième détecteur (SE11) sur base de la détection de l'élément de détection de référence (N) par le deuxième détecteur (SE11), et est à même d'identifier la détection de l'élément de détection (P6) pour l'allumage par le deuxième détecteur (SE11) sur base de la détection du premier élément de détection (PS) par le premier détecteur (SE 12) au cas où le premier élément de détection (PS) est détecté par le premier détecteur (SE 12) avant que l'élément de détection de référence (N) ne soit détecté en premier lieu par le deuxième détecteur (SE11) après la mise en marche de la rotation du vilebrequin (13) dans un état d'arrêt du moteur, et
le dispositif d'allumage (18) est commandé pour allumer le mélange carburant-air comprimé au cours de la course de compression en réponse à la détection de l'élément de détection identifié pour l'allumage (P6).

2. Système de moteur selon la revendication 1, dans lequel
le premier élément de détection (PS) est prévu sur l'élément de rotation (61) de manière à être disposé dans une position différente de l'élément de détection de référence (N) et de la pluralité de deuxièmes éléments de détection (P1 à P11) dans une direction le long d'un axe de rotation de l'élément de rotation (61), et
la première position fixe est différente de la deuxième position fixe dans la direction le long de l'axe de rotation de l'élément de rotation (61).

3. Système de moteur (ES) selon la revendication 1 ou 2, dans lequel
le détecteur d'anomalie (113) est configuré pour détecter l'anomalie de fonctionnement du premier détecteur (SE12) sur base de la détection du premier élément de détection (PS) par le premier détecteur (SE 12) et de la détection de la pluralité de deuxièmes éléments de détection (P1 à P11) par le deuxième détecteur (SE11) en mode normal.

4. Système de moteur (ES) selon la revendication 2 ou 3, dans lequel
le premier détecteur (SE12) présente une première région de détection (SR2) en une position fixe sur une trajectoire sur laquelle passe le premier élément de détection (PS) avec rotation de l'élément de rotation (61), et est configuré pour détecter le premier élément de détection (PS) lorsque le premier élément de détection (PS) passe à travers la première région de détection (SR2), et
le deuxième détecteur (SE 11) présente une deuxième région de détection (SR1) en une position fixe sur une trajectoire sur laquelle passent l'élément de détection de référence (N) et la pluralité de deuxièmes éléments de détection (P1 à P11) avec rotation de l'élément de rotation (61), est configuré pour détecter chaque deuxième élément de détection (P1 à P11) lorsque chaque deuxième élément de détection (P1 à P11) passe à travers la deuxième région de détection (SR1), et est configuré pour détecter l'élément de détection de référence (N) lorsque l'élément de détection de référence (N) passe à travers la deuxième région de détection (SR1).

5. Système de moteur (ES) selon l'une quelconque des revendications 1 à 4, dans lequel
le premier élément de détection (PS) est disposé de manière à être détecté par le premier détecteur (SE12) lorsqu'un piston (11) se trouve dans une position plus proche d'un point mort supérieur qu'une position intermédiaire entre un point mort inférieur et le point mort supérieur, et
l'élément de détection de référence (N) est disposé de manière à être détecté par le deuxième détecteur (SE11) lorsque le piston (11) se trouve en une position plus proche du point mort inférieur que la position intermédiaire.

6. Système de moteur (ES) selon l'une quelconque des revendications 1 à 5, dans lequel
le moteur (10) est un moteur monocylindre.

7. Système de moteur (ES) selon l'une quelconque des revendications 1 à 6, dans lequel
le moyen de commande (6, 111, 112) est configuré pour passer du mode normal au mode d'arrêt au ralenti lorsqu'une condition d'arrêt au ralenti prédéterminée est remplie.

8. Système de moteur (ES) selon la revendication 7, dans lequel
l'état d'arrêt au ralenti comporte une condition qui est relative à au moins l'une parmi une ouverture de l'accélérateur, une vitesse du véhicule et une vitesse de rotation du moteur.

9. Système de moteur (ES) selon l'une quelconque des revendications 1 à 8, dans lequel
le moyen de commande (6, 111, 112) est configuré pour passer du mode d'arrêt au ralenti au mode normal lorsqu'une condition de redémarrage prédéterminée est remplie.

10. Système de moteur (ES) selon la revendication 9, dans lequel
la condition de redémarrage comporte une condition qui est relative à l'ouverture de l'accélérateur.

11. Véhicule à moteur de type à selle (100) comprenant:
une carrosserie principale (1) qui présente une roue motrice (7); et
le système de moteur (ES) selon l'une quelconque des revendications 1 à 10 qui est configuré pour générer de l'énergie pour faire tourner la roue motrice (7).
